(19) Europäisches Patentamt
European Patent Office
Office européen des brevets

(11) **EP 3 417 237 B1**

(12) **EUROPÄISCHE PATENTSCHRIFT**

(45) Veröffentlichungstag und Bekanntmachung des Hinweises auf die Patenterteilung:
**26.05.2021 Patentblatt 2021/21**

(21) Anmeldenummer: **17797858.2**

(22) Anmeldetag: **05.10.2017**

(51) Int Cl.:
*G01B 11/25* (2006.01)    *G01M 11/02* (2006.01)
*G01N 21/84* (2006.01)

(86) Internationale Anmeldenummer:
**PCT/DE2017/200106**

(87) Internationale Veröffentlichungsnummer:
**WO 2018/077356 (03.05.2018 Gazette 2018/18)**

(54) **REFERENZPLATTE UND VERFAHREN ZUR KALIBRIERUNG UND/ODER ÜBERPRÜFUNG EINES DEFLEKTOMETRIE-SENSORSYSTEMS**

REFERENCE PLATE AND METHOD FOR CALIBRATING AND/OR CHECKING A DEFLECTOMETRY SENSOR SYSTEM

PLAQUE DE RÉFÉRENCE ET PROCÉDÉ POUR CALIBRER ET/OU VÉRIFIER UN SYSTÈME DE DÉTECTION PAR DÉFLECTOMÉTRIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.10.2016 DE 102016220888**

(43) Veröffentlichungstag der Anmeldung:
**26.12.2018 Patentblatt 2018/52**

(73) Patentinhaber: **Micro-Epsilon Messtechnik GmbH & Co. KG**
**94496 Ortenburg (DE)**

(72) Erfinder:
• ZWECKINGER, Stephan
94538 Fürstenstein (DE)
• HOCHLEITNER, Josef
94113 Tiefenbach (DE)
• LOFERER, Hannes
94496 Ortenburg (DE)
• WAGNER, Robert
94127 Neuburg am Inn (DE)
• HESSE, Rainer
94496 Ortenburg (DE)

(74) Vertreter: **Patent- und Rechtsanwälte Ullrich & Naumann**
**PartG mbB**
**Schneidmühlstrasse 21**
**69115 Heidelberg (DE)**

(56) Entgegenhaltungen:
EP-A1- 1 003 013        WO-A1-2015/169730
DE-A1- 19 536 297        DE-A1-102011 085 322
DE-A1-102012 208 514    JP-A- H0 735 644
US-A1- 2009 231 574      US-A1- 2010 141 776
US-A1- 2011 007 326      US-A1- 2016 025 591

• Markus C. Knauer ET AL: "<title>Phase measuring deflectometry: a new approach to measure specular free-form surfaces</title>", Proceedings of SPIE, vol. 5457, 10 September 2004 (2004-09-10), pages 366-376, XP055118189, ISSN: 0277-786X, DOI: 10.1117/12.545704
• M. BREITBARTH: "Calibration of a combined system with phase measuring deflectometry and fringe projection", PROC. SPIE 7389, OPTICAL MEASUREMENT SYSTEMS FOR INDUSTRIAL INSPECTION, 17 June 2009 (2009-06-17), XP009514096,
• Schulz Anneli ET AL: "Methods for the characterization of mirror facets for Imaging Atmospheric Cherenkov Telescopes", 32nd International Cosmic Ray Conference (ICRC 2011), vol. 9, 9 November 2011 (2011-11-09), pages 34-37, XP055755339, DOI: 10.7529/ICRC2011/V09/0580

**Beschreibung**

Die vorliegende Erfindung betrifft ein Deflektometrie-Sensorsystem, wobei eine Referenzplatte zur Kalibrierung und/oder Überprüfung des Deflektometrie-Sensorsystems vorgesehen ist.

Des Weiteren betrifft die vorliegende Erfindung ein Verfahren zur Kalibrierung und/oder Überprüfung eines Deflektometrie-Sensorsystems.

Deflektometrie-Sensorsysteme sind seit Jahren aus der Praxis bekannt. Lediglich beispielhaft sei dazu auf das Dokument DE 10 2011 085 322 A1 verwiesen, das ein Verfahren und eine Vorrichtung zur Inspektion einer Oberflächenstruktur einer spiegelnden Beschichtung mittels Deflektometrie offenbart.

Das Messprinzip der Deflektometrie ist besonders für die geometrische Vermessung von glänzenden oder spiegelnden Oberflächen geeignet. Dabei wird ein definiertes Bildmuster über die Spiegelung an der zu vermessenden Oberfläche des Messobjekts mit einer Kamera aufgenommen. Die Verzerrungen des Bildmusters durch die Oberfläche können mittels geeigneter Algorithmen ausgewertet und daraus die geometrischen Eigenschaften der Oberfläche rekonstruiert werden. Häufig wird das Bildmuster, zum Beispiel ein Grauwert-Sinusmuster, mittels eines Bildschirms erzeugt. Die Form des Sinusmusters ist bekannt. Bei Spiegelung des Bildmusters über das Messobjekt wird das Bildmuster verzerrt. Aus der Verzerrung kann dann die Geometrie der Oberfläche berechnet werden und/oder Defekte auf der Oberfläche detektiert werden.

In vielen Fertigungsbereichen werden immer höhere Anforderungen an die Qualität und das Erscheinungsbild der Oberfläche eines Bauteils gestellt. Insbesondere bei spiegelnden Oberflächen wird eine fehlerfreie Produktion vorausgesetzt. Häufig werden die Teile manuell geprüft, was zum Beispiel aufgrund von Ermüdung des Prüfpersonals zu Fehlerschlupf führt. Daher kann mittels robotergestützter Deflektometrie-Sensorsysteme eine automatische Oberflächeninspektion von Bauteilen erfolgen, die aufgrund Ihrer Abmessungen mehrere Messpositionen erfordern.

Dazu kann der Deflektometrie-Sensor ein Streifenmuster als Bildmuster auf seinem Bildschirm darstellen, welches über die Oberfläche des Messobjekts in die Kameras des Deflektometrie-Sensors gespiegelt wird. Defekte auf der Oberfläche verursachen Abweichungen im Streifenmuster, die mit einer Software ausgewertet werden können. Ein Deflektometrie-Sensor - bestehend aus einem Bildschirm zur - Streifendarstellung (oder anderer Bildmusterdarstellungen) sowie einer oder mehrerer Kameras - wird von einem Roboter über das Messobjekt geführt. Dadurch können Objekte inspiziert werden, deren Geometrie mehrere Messpositionen erfordert. Anhand eines 3D-Modells (CAD) des Messobjekts wird das Roboterprogramm erstellt. Der Sensor wird vom Roboter über die relevanten Flächen geführt und inspiziert die Oberfläche. Die ermittelten Defekte werden ausgewertet und können in einem 3D-Modell angezeigt werden.

Bei Messsystemen, die auf Roboter bzw. auf Roboterarmen montiert sind, ist die Kalibrierung jedoch besonders aufwändig und kompliziert. Die Roboterachsen selbst können mit aus der Praxis bekannten Verfahren kalibriert werden, so dass ein eindeutiges Bezugssystem für den Tool Center Point (TCP) definiert ist. Wird ein Messsystem durch den Roboter bzw. durch den Roboterarm bewegt, so ist damit auch die genaue Lage des Messsystems bekannt. Sofern das Messsystem selbst kalibriert ist, ist eine exakte Geometrievermessung des Messobjekts möglich.

Bei einem Deflektometrie-Sensorsystem ist jedoch problematisch, dass die exakte Position von der Kamera - als Erfassungselement einer Erfassungseinrichtung - und von dem durch das Messobjekt zu reflektierenden Bildmuster (und damit der Bildschirm als Bilderzeugungseinrichtung) relativ zueinander unter der Nebenbedingung der spiegelnden Reflexion durch das Messobjekt bekannt sein müssen. Des Weiteren kann der Deflektometrie-Sensor eines Deflektometrie-Sensorsystems auch mehrere Kameras aufweisen, wodurch eine Vielzahl von relativen Positionen zueinander (jede Kamera zum Bildschirm und die Kameras untereinander) bestimmt sein müssen.

Bildverarbeitende Messprinzipien erfordern meist eine Kalibration der Messvorrichtung. Verfahren zur Kalibrierung einer Kamera bzw. eines Systemaufbaus sind aus der Praxis bekannt. Beispielsweise kann dafür ein Referenztarget verwendet werden. Das Referenztarget kann ein definiertes Muster mit bekannten geometrischen Eigenschaften aufweisen, so dass anhand des Referenztargets die Kamera kalibriert werden kann. Ein aus der Praxis bekanntes Referenztarget für die Bildverarbeitung besteht aus einer flachen Platte, auf der ein definiertes Muster aufgedruckt ist. Dieses Referenztarget ist für ein Deflektometrie-Sensorsystem jedoch nur eingeschränkt nutzbar, da damit nur die Kamera kalibrierbar ist. Eine Kalibrierung der gesamten Messanordnung bzw. des Messaufbaus ist nicht möglich.

Aus dem Dokument Markus C. Knauer et al.: "Phase Measuring Deflectometry: a new approach to measure specular free-form surfaces", Proceedings of SPIE, Bd. 5457, 10. September 2004, Seiten 366-376, XP055118189 ist ein Verfahren zur Messung von spiegelnden Freiformflächen bekannt.

Das Dokument Breitbarth M., Kühmstedt P., Notni G., "Calibration of a combined system with phase measuring deflectometry and fringe projection", Proc. SPIE 7389, Optical Measurement Systems for Industrial Inspection VI, 738909 (17 June 2009) offenbart ein Verfahren zur Kalibrierung eines kombinierten Systems mit phasenmessender Deflektometrie und Streifenprojektion.

Die US 2016/0025591 A1 offenbart ein automatisiertes Deflektometriesystem zur Beurteilung der Reflektorqualität.

WO 2015/169730 A1 offenbart ein Verfahren und einen Sensor zur Bestimmung der Oberfläche eines Objekts mittels Deflektometrie.

Die Druckschriften US 2010/0141776 A1, JP H07 35644 A, EP 1 003 013 A1, DE 10 2012 208 514 A1 und DE 195 36 297 A1 offenbaren weitere Verfahren und Systeme zur Kalibrierung diverser optischer Systeme.

US 2011/0007326 A1 offenbart ein Verfahren zur Bestimmung der 3D-Koordinaten eines Objekts und US 2009/0231574 A1 betrifft ein Winkelmessgerät bzw. - verfahren.

Der vorliegenden Erfindung liegt daher die Aufgabe zugrunde, ein Verfahren zur Kalibrierung und/oder Überprüfung eines Deflektometrie-Sensorsystems und ein entsprechendes Deflektometrie-Sensorsystem der eingangs genannten Art derart auszugestalten und weiterzubilden, dass mit konstruktiv einfachen Mitteln eine einfache und möglichst zeitsparende Überprüfung und/oder Kalibrierung des Deflektometrie-Sensorsystems realisiert ist.

Erfindungsgemäß ist die voranstehende Aufgabe durch die Merkmale des Anspruchs 1 gelöst. Danach ist ein Deflektometrie-Sensorsystem angegeben, wobei eine Referenzplatte zur Kalibrierung und/oder Überprüfung des Deflektometrie-Sensorsystems vorgesehen ist, wobei das Deflektometrie-Sensorsystem eine Bilderzeugungseinrichtung und eine Erfassungseinrichtung umfasst, wobei die Erfassungseinrichtung mehrere Erfassungselemente umfasst, wodurch sich ein größeres Sichtfeld ergibt, wobei die Referenzplatte der Größe des Sichtfeldes entspricht, wobei die Referenzplatte eine spiegelnde Oberfläche aufweist, wobei zur Überprüfung von mindestens einem Systemparameter des Deflektometrie-Sensorsystems die spiegelnde Oberfläche mit einem vordefinierten, Markierungen umfassenden Muster versehen ist, und wobei das vordefinierte Markierungen umfassende Muster derart ausgebildet ist, dass das vordefinierte Muster mehrere Markierungsgruppen umfasst, und dass für jedes Erfassungselement der Erfassungseinrichtung eine Markierungsgruppe zur Bildaufnahme vorgesehen ist.

In Bezug auf das erfindungsgemäße Verfahren ist die voranstehende Aufgabe durch die Merkmale des Anspruchs 7 gelöst. Danach ist ein Verfahren zur Kalibrierung und/oder Überprüfung eines Deflektometrie-Sensorsystems angegeben, wobei das Deflektometrie-Sensorsystem einen Deflektometrie-Sensor mit einer Bilderzeugungseinrichtung und einer Erfassungseinrichtung umfasst, wobei die Erfassungseinrichtung mehrere Erfassungselemente umfasst, wodurch sich ein größeres Sichtfeld ergibt, wobei mittels einer Referenzplatte eine Funktionsprüfung des Deflektometrie-Sensorsystems durchgeführt wird, wobei die Referenzplatte der Größe des Sichtfeldes entspricht, wobei die Referenzplatte eine spiegelnde Oberfläche aufweist, die mit einem vordefinierten, Markierungen umfassenden Muster versehen ist, wobei das vordefinierte Markierungen umfassende Muster derart ausgebildet ist, dass das vordefinierte Muster mehrere Markierungsgruppen umfasst, und dass für jedes Erfassungselement der Erfassungseinrichtung eine Markierungsgruppe zur Bildaufnahme vorgesehen ist, wobei der Deflektometrie-Sensor vor der Referenzplatte in einem definierten Abstand positioniert und mit jedem Erfassungselement der Erfassungseinrichtung ein Bild von der Referenzplatte aufgenommen wird, wobei anhand des aufgenommenen Bildes bzw. anhand der aufgenommenen Bilder mindestens ein Systemparameter des Deflektometrie-Sensorsystems bestimmt bzw. überprüft wird.

In erfindungsgemäßer Weise ist erkannt worden, dass es hinsichtlich einer einfachen und möglichst zeitsparenden Kalibrierung eines Deflektometrie-Sensorsystems von ganz besonderem Vorteil ist, wenn mit möglichst wenig Kalibrierwerkzeugen möglichst viele Systemparameter des Messsystems überprüfbar und/oder kalibrierbar sind. Erfindungsgemäß ist dazu eine Referenzplatte vorgesehen, die eine spiegelnde Oberfläche aufweist und wobei zur Überprüfung von mindestens einem Systemparameter des Deflektometrie-Sensorsystems die Oberfläche der Referenzplatte mit einem vordefinierten Muster versehen ist. Dabei umfasst das Muster Markierungen, die zur Überprüfung und Ermittlung mehrerer Systemparameter verwendbar sind. Somit wird mittels der Referenzplatte eine Funktionsprüfung des Deflektometrie-Sensorsystems durchgeführt, wobei mit dem Erfassungselement bzw. mit den Erfassungselementen der Erfassungseinrichtung ein Bild von der Referenzplatte aufgenommen wird. Anhand des aufgenommenen Bildes bzw. - bei mehreren Erfassungselementen - anhand der jeweils aufgenommenen Bilder wird mindestens ein Systemparameter des Deflektometrie-Sensorsystems bestimmt und/oder überprüft.

Folglich sind mit dem erfindungsgemäßen Deflektometrie-Sensorsystem, wobei eine Referenzplatte vorgesehen ist, und mit dem erfindungsgemäßen Verfahren zur Kalibrierung und/oder Überprüfung eines Deflektometrie-Sensorsystems ein System und ein Verfahren angegeben, wonach mit konstruktiv einfachen Mitteln eine einfache und möglichst zeitsparende Überprüfung und/oder Kalibrierung des Deflektometrie-Sensorsystems ermöglicht ist.

An dieser Stelle sei angemerkt, dass ein Deflektometrie-Sensorsystem eine Bilderzeugungseinrichtung und eine Erfassungseinrichtung umfasst. Als Bilderzeugungseinrichtung kann zum Beispiel ein Bildschirm bzw. Monitor verwendet werden. Die Erfassungseinrichtung dient zur Bildaufnahme eines über ein Messobjekt gespiegeltes Bild bzw. Bildmuster der Bilderzeugungseinrichtung. Die Erfassungseinrichtung weist mehrere Erfassungselemente auf. Zweckmäßigerweise kann als Erfassungselement eine Kamera verwendet werden. Ein Deflektometrie-Sensor eines Deflektometrie-Sensorsystems kann beispielsweise aus der Bilderzeugungseinrichtung und der Erfassungseinrichtung gebildet werden und dabei vorzugsweise als eine Einheit ausgebildet sein.

Im Konkreten umfasst der Deflektometrie-Sensor des Deflektometrie-Sensorsystems mehrere Kameras als Erfassungselemente, damit ein größeres Sichtfeld vermessen werden kann. Die Kameras sind an der Bilderzeugungseinrichtung, zum Beispiel einem Bildschirm, angeordnet. Dabei ist es denkbar, dass die Kameras beispielsweise an den Ecken oder Kanten, oder nur auf einer Seite der Bilderzeugungseinrichtung angeordnet sind. Es ist dann besonders vorteilhaft, wenn die Referenzplatte so ausgestaltet ist, dass jede Kamera der Erfassungseinrichtung des Deflektometrie-Sensors ein auf die geometrische Anordnung angepasstes Muster "sieht". Da die Kameras in vorteilhafter Weise derart angeordnet sein können, dass man ein möglichst großes Sichtfeld erhält, sollte die Referenzplatte zweckmäßigerweise der Größe des Sichtfelds entsprechen. Durch die Anordnung der Kameras kann es sein, dass das Sichtfeld auf die Referenzplatte perspektivisch verzerrt ist. In diesem Fall ist es vorteilhaft, wenn die Anordnung von Markierungen des vordefinierten Musters diese Verzerrung weitgehend ausgleicht, zum Beispiel indem die vorgebbaren Markierungen perspektivisch angeordnet werden. Somit kann das Sichtfeld einer Kamera beispielsweise auch an den Ecken überprüft und kalibriert werden.

Um Montage- und Fertigungstoleranzen zu kompensieren, kann die Position der Bilderzeugungseinrichtung und/oder der Erfassungseinrichtung vor der Referenzplatte bei der Inbetriebnahme des Deflektometrie-Sensorsystems zusätzlich korrigiert werden. Sofern die Bilderzeugungseinrichtung zusammen mit der Erfassungseinrichtung als Deflektometrie-Sensor ausgebildet ist und dieser Deflektometrie-Sensor auf einem Roboter montiert ist, kann eine zusätzliche Korrektur durch eine Korrektur-Transformation im Roboter erfolgen. Die Korrektur-Transformation kann derart bestimmt werden, dass die tatsächlichen 3D-Koordinaten von Markierungen, zum Beispiel codierte Marken, mit den theoretischen 3D-Koordinaten bestmöglich übereinstimmen. Durch die korrigierte Sensorcheck-Position des Roboters, d. h. die Position des Roboters zur Durchführung der Funktionsprüfung des Deflektometrie-Sensorsystems, steht der Deflektometrie-Sensor wieder ideal zur Referenzplatte. Insbesondere ist damit sichergestellt, dass die Position des Deflektometrie-Sensors bzw. der Bilderzeugungseinrichtung und der Erfassungseinrichtung relativ zum Messobjekt sensor-, anlagen- und roboterübergreifend identisch ist.

In vorteilhafter Weise können die Markierungen des vordefinierten Musters - zumindest in der Draufsicht auf die Oberfläche der Referenzplatte - in Form eines regelmäßigen Rasters angeordnet sein. Somit ist eine besonders einfache und zuverlässige Kalibrierung und/oder Überprüfung des Deflektometrie-Sensorsystems möglich. Dabei ist denkbar, dass die Markierungen gemäß den Gitterpunkten eines strukturierten Gitters auf der Oberfläche angeordnet sind. Als strukturierte Gitter könnten beispielsweise rechtwinklige Gitter, gleichmäßige Gitter und/oder kartesische Gitter verwendet werden. Das kartesische Gitter stellt - mit einer quadratischen Gitterstruktur - den einfachsten Fall dar, wobei die Abstände zwischen den Markierungen jeweils gleich sind. In der Draufsicht betrachtet wird von den Markierungen somit eine Quadratfläche eingeschlossen. In der Draufsicht ist derart zu verstehen, dass die Markierungen des vordefinierten Musters in einer Ebene oder auch in unterschiedlichen Ebenen angeordneten Ebenen angeordnet sein könnten. Zweckmäßigerweise ist die Anordnung der Markierungen des vordefinierten Musters bzw. die Struktur des vordefinierten Musters bekannt. Im Rahmen einer weiteren vorteilhaften Ausgestaltung kann die Anordnung der Markierungen des vordefinierten Musters bzw. die Struktur des vordefinierten Musters gemäß einer vordefinierten, statistischen Verteilung vorgesehen sein.

In weiter vorteilhafter Weise können die Markierungen nicht-planar auf der spiegelnden Oberfläche angeordnet sein. Somit ist denkbar, dass eine nicht-planare Ausführung der Referenzplatte realisiert wird, wobei die Markierungen in unterschiedlichen Höhen auf der Referenzplatte angeordnet sind. Dadurch ist es möglich, dass neben der Bestimmung der externen Systemparameter der Erfassungseinrichtung bzw. deren Erfassungselementen wie beispielsweise die 3D-Position und 3D-Orientierung der Erfassungselemente (3 x Rotation, 3 x Translation) auch eine Bestimmung der internen Systemparameter der Erfassungseinrichtung möglich ist. Interne Systemparameter der Erfassungseinrichtung umfassen beispielsweise optische Verzeichnungen und/oder Skalierungsfaktoren, etc.

Das vordefinierte - Markierungen umfassende - Muster auf der spiegelnden Oberfläche der Referenzplatte ist derart ausgebildet, dass das vordefinierte Muster mehrere Markierungsgruppen umfasst und dass unter Berücksichtigung der geometrischen Anordnung des Deflektometrie-Sensorsystems für jedes Erfassungselement der Erfassungseinrichtung eine Markierungsgruppe zur Bildaufnahme vorgesehen ist. Eine Markierungsgruppe kann dabei als Gruppe von mehreren Markierungen verstanden werden. Zweckmäßigerweise kann eine Markierungsgruppe dabei an das jeweilige Erfassungselement der Erfassungseinrichtung individuell angepasst sein, wobei zum Beispiel eine perspektivische Verzerrung durch die Anordnung des Deflektometrie-Sensorsystem berücksichtigt wird.

In vorteilhafter Weise können die Markierungen Farbmarken umfassen.

In vorteilhafter Weise können die Markierungen codierte Marken umfassen. Codierte Marken sind beispielsweise Marken mit codierter Punktnummer. Dazu kann eine codierte Marke ein Muster tragen, das einem Code entspricht, der eine eindeutige Nummerierung repräsentiert. Zum Beispiel können linien-, ring- oder flächenhaft verteilte Punktcodierungen verwendet werden, die um den eigentlichen Messpunkt herum angeordnet sind. Dadurch können Codes mit mehreren hundert verschiedenen Punktnummern erzeugt werden. Die codierten Marken können zweckmäßigerweise derart ausgebildet sein, dass sie gegenüber Lage, Drehung und Größe invariant sind. Des Weiteren können codierte Marken gegenüber perspektiver oder affiner Verzerrung invariant ausgebildet sein. Anhand der codierten Marken kann eine Korrektur-Transformation in einem Roboter erzeugt werden, die derart bestimmt wird, dass die tatsächlichen 3D-Koordinaten der codierten Marken mit den theoretisch vorgebbaren 3D-Koordinaten bestmöglich übereinstimmen. Folglich kann mittels der berechneten Korrektur-Transformation die Position des Roboters, auf dem ein Deflektometrie-Sensor montiert ist, derart korrigiert werden, dass der Deflektometrie-Sensor wieder ideal zur Referenzplatte steht.

Somit ist insbesondere gewährleistet, dass die Position des Deflektometrie-Sensors, d.h. umfassend Bilderzeugungseinrichtung und Erfassungseinrichtung, relativ zum Messobjekt sensor-, anlagen- und roboterübergreifend identisch ist. Eine Verwendung von codierten Marken hat den besonderen Vorteil, dass nicht sämtliche vorhandenen codierten Marken - Codemarken - im Kamerabild sichtbar sein müssen. Es reicht aus, eine Teilmenge der codierten Marken zu betrachten, da durch die Kodierung die Markierungen eindeutig den einzelnen Punktpositionen zugeordnet werden können.

In vorteilhafter Weise können die Markierungen Siemenssterne umfassen. Somit kann auf raffinierte Weise anhand der Siemenssterne Schärfe, Kontrast und/oder Sichtbereiche der Erfassungseinrichtung bzw. von deren Erfassungselementen bestimmt, ermittelt und/oder ausgewertet werden. Siemenssterne bieten den Vorteil, dass beispielsweise die Schärfe unabhängig von der Größe des Siemenssterns bestimmt werden kann.

In vorteilhafter Weise können die Markierungen vordefinierte Konturkanten umfassen. Somit lässt sich auf raffinierte Weise die Schärfe eines Bildes über die Steilheit der vordefinierten Konturkanten bestimmen.

In vorteilhafter Weise können die Markierungen ein vordefiniertes Testchart umfassen. Als Testchart kann zum Beispiel ein Strichgitter, ein Schärfentiefetester und/oder ein Auflösungstestbild (USAF, NBS) verwendet werden.

In vorteilhafter Weise können die Siemenssterne in dem vordefinierten Muster bzw. in den - vom vordefinierten Muster umfassten - Markierungsgruppen derart angeordnet sein, dass in jedem Eckbereich eines durch ein Erfassungselement der Erfassungseinrichtung aufgenommenen Bildes ein Siemensstern vorhanden ist. Somit kann der gesamte Bildbereich eines Erfassungselements zur Funktionsprüfung des Deflektometrie-Sensorsystems verwendet werden.

In vorteilhafter Weise können die Siemenssterne in dem vordefinierten Muster bzw. in den vom vordefinierten Muster umfassten Markierungsgruppen derart angeordnet sein, dass jeweils im mittleren Bereich eines durch ein Erfassungselement der Erfassungseinrichtung aufgenommenen Bildes ein Siemensstern vorhanden ist. Dadurch kann der gesamte Bildbereich abgedeckt werden, insbesondere die Ecken und die Mitte. Somit ist auf raffinierte Weise eine Kontrolle der Schärfe, zum Beispiel von rechts-oben nach links-unten - trotz perspektivischer Draufsicht - durchführbar.

In vorteilhafter Weise kann die Referenzplatte zur Funktionsprüfung derart angeordnet werden, dass von der Bilderzeugungseinrichtung umfasste Bildpunkte durch Spiegelung über die Referenzplatte auf die Erfassungseinrichtung abgebildet werden. In vorteilhafter Weise kann die Referenzplatte dabei in einem vordefinierten Abstand zur Erfassungseinrichtung positioniert werden. Somit ist der Abstand zwischen Erfassungseinrichtung und Referenzplatte bekannt und kann zur Berechnung von Systemparametern verwendet werden. Folglich kann die Referenzplatte in einem vordefinierten Abstand zur Erfassungseinrichtung und mit vordefinierter Neigung in Relation zur Erfassungsrichtung positioniert werden, so dass eine exakte und präzise Deflektometrie-Messung und eine entsprechende Systemparameterberechnung ermöglicht ist.

In vorteilhafter Weise kann die Bilderzeugungseinrichtung mit homogener Helligkeit betrieben werden. In besonders vorteilhafter Weise wird dabei auf bzw. mit der Bilderzeugungseinrichtung ein weißes Bild erzeugt. Als Bilderzeugungseinrichtung ist beispielsweise ein Bildschirm, ein Monitor bzw. eine ein Bildmuster erzeugende Lichtquelle denkbar. Somit kann das vordefinierte - Markierungen umfassende - Muster auf der Oberfläche der Referenzplatte auf einem weißen Hintergrund dargestellt werden und zur Überprüfung und/oder Kalibrierung von Systemparametern des Deflektometrie-Sensorsystems einfach und optimal ausgewertet werden.

In vorteilhafter Weise kann auf der Bilderzeugungseinrichtung ein vordefiniertes, Markierungen umfassendes Muster und/oder eine vordefinierte, Markierungen umfassende Mustersequenz erzeugt werden. Somit kann - zusätzlich zur Verwendung von Markierungen auf der Referenzplatte - über den Einsatz von Markierungen (Muster) und/oder Mustersequenzen auf der Bilderzeugungseinrichtung die Position der Bilderzeugungseinrichtung überprüft und/oder kalibriert werden. Zum Beispiel kann aus deflektometrischen Messungen mit verschiedenen Streifenbreiten (Schwebungsaufnahmen) eine Korrespondenz zwischen Erfassungselementpixel und Bilderzeugungseinrichtungspixel hergestellt werden. D. h. für jeden Pixel/Bildpunkt der Kamera kennt man die zugehörige Position auf dem Bildschirm. Diese Pixelpositionen können, ggf. umgerechnet in eine metrische Einheit, zusätzlich zu Markierungen auf der Referenzplatte für eine Kamerakalibrierung verwendet werden. Somit können intrinsische und/oder extrinsische Kameraparameter bezüglich der virtuellen Bildschirmposition (geradliniger Strahlengang) ermittelt werden. Mit Hilfe der Markierungen auf der Referenzplatte kann die reale Position der Referenzplatte ermittelt werden, und damit schließlich auch die reale Position des Bildschirms. Sind des Weiteren die geometrischen Eigenschaften der Referenzplatte bekannt, kann sogar das deflektometrische Messergebnis der Referenzplatte selbst im Sinne einer Referenzmessung für die Überwachung und/oder Kalibrierung der deflektometrischen Einheit verwendet werden. Ist die Referenzplatte beispielsweise ein (nahezu) perfekter Planspiegel, so kann unter der Nebenbedingung der Ebenheit aus den bekannten Positionen der Markierungen die relativen Positionen von Bilderzeugungseinrichtung bzw. Bildschirm und Erfassungseinrichtung bzw. deren Erfassungselement überwacht und/oder kalibriert werden.

In vorteilhafter Weise kann das mit dem Erfassungselement bzw. das mit den Erfassungselementen jeweils aufgenommene Bild eine Markierungen umfassende Markierungsgruppe umfassen, wobei anhand der mit dem Bild aufgenommenen Markierungsgruppe der mindestens eine Systemparameter des Deflektometrie-Sensorsystems bestimmt wird. Folglich können anhand von individuell an ein Erfassungselement angepassten Markierungsgruppen Systemparameter des jeweiligen Erfassungselements präzise ausgewertet und überprüft werden.

In vorteilhafter Weise können Systemparameter des Deflektometrie-Sensorsystems mindestens einen Schärfeparameter, mindestens einen Sichtbereichsparameter, mindestens einen Helligkeitsparameter, mindestens einen Positionsparameter und/oder mindestens einen Roboterkorrekturparameter umfassen. Somit sind sämtliche wesentlichen Systemparameter eines Deflektometrie-Sensorsystems berücksichtigt, wodurch eine präzise Funktionsweise des Deflektometrie-Sensorsystems gewährleistet ist.

In vorteilhafter Weise können zur Ermittlung des Schärfeparameters eines Erfassungselements der Erfassungseinrichtung Schärfewerte von Siemenssternen des vordefinierten Musters detektiert und/oder ausgewertet werden. Sofern die Erfassungseinrichtung mehrere Erfassungselemente aufweist, kann das jeweilige Erfassungselement die Siemenssterne berücksichtigen, die sich innerhalb der dem jeweiligen Erfassungselement zugeordneten Markierungsgruppe befinden. Somit kann ein relevanter Systemparameter eines Deflektometrie-Sensorsystems berücksichtigt werden.

In vorteilhafter Weise können zur Ermittlung des Sichtbereichsparameters eines Erfassungselements der Erfassungseinrichtung Positionen von Siemenssternen des vordefinierten Musters detektiert und/oder ausgewertet werden. Sofern die Erfassungseinrichtung mehrere Erfassungselemente aufweist, kann das jeweilige Erfassungselement die Siemenssterne berücksichtigen, die sich innerhalb der dem jeweiligen Erfassungselement zugeordneten Markierungsgruppe befinden. Somit kann ein relevanter Systemparameter eines Deflektometrie-Sensorsystems berücksichtigt werden.

In vorteilhafter Weise kann zur Ermittlung des Helligkeitsparameters eines Erfassungselements der Erfassungseinrichtung eine Grauwertbestimmung in einem vorgebbaren, vorzugsweise mittleren, Bildbereich des durch das Erfassungselement erfassten Bildes durchgeführt werden. Dabei wird der Bildbereich in vorteilhafter Weise derart ausgewählt, dass in dem Bildbereich keine Markierungen des vordefinierten Musters vorhanden sind. Mit anderen Worten kann die Helligkeit über die nicht bedruckten Bereiche der spiegelnden Oberfläche ermittelt werden, indem das Bild der Bilderzeugungseinrichtung im Spiegel, d. h. in der spiegelnden Oberfläche der Referenzplatte, betrachtet wird. Somit kann ein relevanter Systemparameter eines Deflektometrie-Sensorsystems berücksichtigt werden.

In vorteilhafter Weise kann zur Helligkeitskorrektur des Deflektometrie-Sensorsystems eine neue Helligkeitseinstellung der Bilderzeugungseinrichtung zum Erreichen eines Sollgrauwerts der Erfassungseinrichtung aus einem mit vordefinierter Helligkeitseinstellung der Bilderzeugungseinrichtung aufgenommenen Grauwert der Erfassungseinrichtung berechnet werden. Demnach kann zur Helligkeitskorrektur des Deflektometrie-Sensorsystems eine neue Helligkeitseinstellung der Bilderzeugungseinrichtung für einen Sollgrauwert der Erfassungseinrichtung aus der bisherigen Helligkeitseinstellung, dem daraus resultierenden aktuellen Grauwert sowie einem annähernd bekannten Zusammenhang dieser Werte berechnet werden. Somit ist es nun möglich, durch eine Applikationssoftware im laufenden Betrieb automatisiert und regelmäßig die Helligkeit der Bilderzeugungseinrichtung einzustellen und damit den Helligkeitsabfall der Bilderzeugungseinrichtung zu korrigieren. Da dies im Rahmen einer täglichen Funktionsprüfung erfolgen kann, ist kein zusätzlicher Zeitaufwand erforderlich. Des Weiteren kann automatisiert eine Aufforderung zum Ersetzen der bisherigen - alten - Bilderzeugungseinrichtung abgegeben werden, sobald die Bilderzeugungseinrichtung soweit gealtert ist, dass die maximale Helligkeitseinstellung nicht mehr ausreicht, um den Helligkeitsabfall zu kompensieren. Somit kann auf raffinierte Weise und vorzugsweise automatisiert im produktiven Einsatz ein konstantes Messergebnis erzielt werden.

In vorteilhafter Weise können zur Ermittlung des Positionsparameters eines Erfassungselements Positionen von codierten Marken des vordefinierten Musters detektiert und/oder ausgewertet werden. Sofern die Erfassungseinrichtung mehrere Erfassungselemente aufweist, kann das jeweilige Erfassungselement die codierten Marken berücksichtigen, die sich innerhalb der dem jeweiligen Erfassungselement zugeordneten Markierungsgruppe befinden. Somit kann ein relevanter Systemparameter eines Deflektometrie-Sensorsystems berücksichtigt werden.

In vorteilhafter Weise können zur Ermittlung des Roboterkorrekturparameters, insbesondere zur Ermittlung einer 3D-Transformation als Roboterkorrekturparameter, Abstände zwischen Soll-Position und aktueller Position der codierten Marken bestimmt werden, wobei mittels eines Minimierungsalgorithmus der Roboterkorrekturparameter bzw. die 3D-Transformation berechnet wird. Somit kann ein relevanter Systemparameter eines Deflektometrie-Sensorsystems berücksichtigt werden. Im Konkreten können beispielsweise über eine zuvor erfolgte Kamerakalibrierung und über eine aktuelle Kamerapositionsprüfung für detektierte codierte Marken aller Kameras folgende Informationen verfügbar sein:

- Soll-3D-Koordinaten der codierten Marken laut CAD (computer-aided design)
- Aktuelle 3D-Koordinaten der codierten Marken nach Kamerapositionsprüfung.

Das Ziel ist nun, den Deflektometrie-Sensor so zu positionieren bzw. zu korrigieren, dass diese beiden 3D-Punktmengen bestmöglich übereinstimmen. Demnach kann für jede detektierte codierte Marke der Abstand zwischen Soll-Position und aktueller Position bestimmt werden. Im Sinne eines Minimierungsproblems (zum Beispiel Summe der Abstandsquadrate aller Punkte aller Kameras soll minimal sein) kann eine 3D-Transformation (3x Rotation, 3x Translation) berechnet werden, die zur Korrektur der Roboterposition verwendet wird, um die aktuell gemessenen 3D-Positionen der codierten Marken näher an die Soll-Positionen zu bringen.

Vorteilhafte Ausgestaltungen der Referenzplatte können zur Online-Überwachung und Online-Kompensation von Deflektometrie-Sensoren bzw. Deflektometrie-Sensorsystemen eingesetzt werden. Mit einer einzelnen Referenzplatte können mehrere bzw. eine Vielzahl von Systemparametern eines Deflektometrie-Sensorsystems geprüft, überwacht, kompensiert und/oder kalibriert werden. Vorteilhafte Ausgestaltungen der Erfindung können die Funktionsfähigkeit eines Deflektometrie-Sensors bzw. eines Deflektometrie-Sensorsystems bei der Fertigung sicherstellen und im Laufe seiner Lebensdauer die Funktionsfähigkeit überprüfen. Dazu kann die Position, Schärfe und Helligkeit der Kameras des Deflektometrie-Sensors sowie deren Sichtbereiche eingestellt bzw. überprüft und bewertet werden. Stimmen einzelne Systemparameter - abgesehen von einstellbaren Toleranzen - nicht mit vorgegebenen Sollwerten überein, so ist die Funktionsfähigkeit nicht mehr gewährleistet und der Sensor sollte entweder nachjustiert oder getauscht werden.

Die Funktionsprüfung kann zum einen am Ende des Fertigungsprozesses stattfinden, sodass nur Deflektometrie-Sensoren, deren Systemparameter innerhalb definierter Grenzen liegen, ausgeliefert werden.

Zum anderen sollten die Systemparameter der Deflektometrie-Sensoren im Laufe ihrer Lebenszeit ebenfalls innerhalb dieser Grenzen bleiben, wodurch eine regelmäßige Funktionsprüfung der Parameter für Position, Schärfe, Helligkeit und Sichtbereiche im laufenden Betrieb der Anlage erforderlich ist. Abhängig von den berechneten Ergebnissen der Funktionsprüfung können entsprechende Meldungen an Bediener bzw. an die Anlagensteuerung ausgegeben werden.

Verzichtet man auf eine Überprüfung der Solleigenschaften des Deflektometrie-Sensors am Ende des Fertigungsprozesses bzw. während des Einsatzes des Sensors, so liefern Sensoren aus unterschiedlichen Fertigungsabläufen bzw. durch Änderungen wie beispielsweise Alterung, mechanische Verformung, Temperaturänderung etc., im Laufe Ihrer Lebenszeit zunächst voneinander unterschiedliche Messergebnisse. Auswertungsparameter für Algorithmen, die auf diesen Messdaten, zum Beispiel zur Defekterkennung auf spiegelnden Oberflächen oder zur 3D Geometrierekonstruktion der Oberfläche aufsetzen, sind dann fortlaufend anzupassen, um einheitliche Ergebnisse sicherzustellen. Unterschiede in der Fertigung verhindern ferner beispielsweise einen einfachen Tausch von Deflektometrie-Sensoren im Sinne von Ersatzteilen in zugehörigen Prüfanlagen ohne etwaige Anpassung der nachfolgenden Auswerteparameter. Ein einheitlicher paralleler Betrieb mehrerer Anlagen mit mehreren solcher Sensoren ist ebenfalls schwer zu erreichen.

Es gibt nun verschiedene Möglichkeiten, die Lehre der vorliegenden Erfindung in vorteilhafter Weise auszugestalten und weiterzubilden. Dazu ist einerseits auf die dem Anspruch 1 und dem Anspruch 7 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert.

In der Zeichnung zeigen

Fig. 1    in einer schematischen Ansicht einen beispielhaften Aufbau eines Deflektometrie-Sensorsystems,

Fig. 2    in einer schematischen Draufsicht ein Ausführungsbeispiel einer erfindungsgemäßen Referenzplatte,

Fig. 3    in einer schematischen Draufsicht das Ausführungsbeispiel gemäß Fig. 2, wobei mehrere Markierungsgruppen auf der beispielhaften Referenzplatte dargestellt sind,

Fig. 4    in schematischer Ansicht vier Bilder der Referenzplatte gemäß Fig. 2 bzw. gemäß Fig. 3, die jeweils mit einer Kamera eines vier Kameras umfassenden Deflektometrie-Sensorsystems aufgenommen worden sind,

Fig. 5    einen beispielhaften Siemensstern für ein Ausführungsbeispiel einer erfindungsgemäßen Referenzplatte und zur Schärfeprüfung gemäß einem Ausführungsbeispiel des erfindungsgemäßen Verfahrens,

Fig. 6    in einer schematischen Ansicht eine Veranschaulichung einer Sichtbereichsprüfung gemäß einem Ausführungsbeispiel des erfindungsgemäßen Verfahrens,

Fig. 7    in einer schematischen Ansicht eine Veranschaulichung einer Kamerapositionsprüfung gemäß einem Ausführungsbeispiel des erfindungsgemäßen Verfahrens,

Fig. 8    ein Diagramm zur Veranschaulichung der Alterung eines Bildschirms in Bezug auf die relative Lichtemission,

Fig. 9    ein Diagramm zur Veranschaulichung des Zusammenhangs zwischen Kameragrauwert und Bildschirmhelligkeit eines Deflektometrie-Sensors,

Fig. 10    ein Diagramm zur Veranschaulichung des Zusammenhangs zwischen Bildschirmhelligkeit und Backlighteinstellung des Bildschirms eines Deflektometrie-Sensors,

Fig. 11    ein Diagramm zur Veranschaulichung des Zusammenhangs zwischen Kameragrauwert und Backlighteinstellung des Bildschirms eines Deflektometrie-Sensors und

Fig. 12    ein Diagramm zur Veranschaulichung des Zusammenhangs zwischen Bildschirmhelligkeit und Backlighteinstellung im Intervall [80; 100] eines Deflektometrie-Sensors.

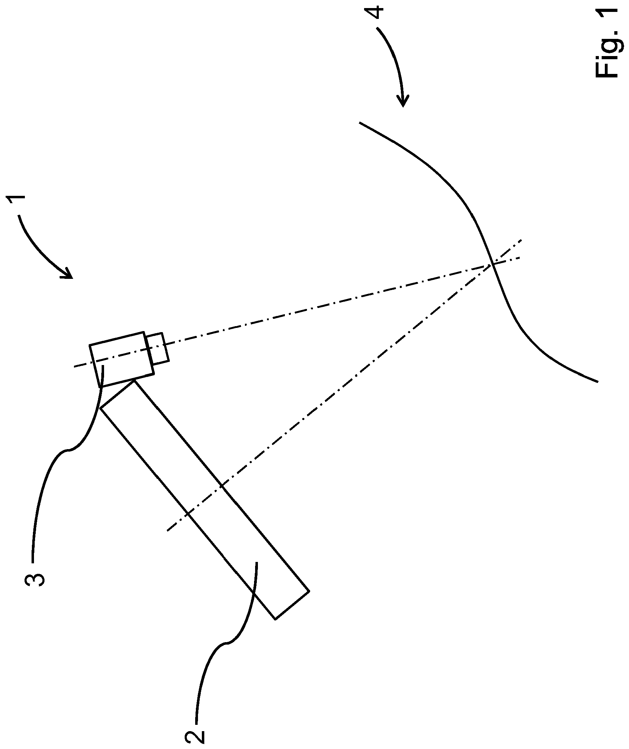

Fig. 1 zeigt in einer schematischen Ansicht einen beispielhaften Aufbau eines Deflektometrie-Sensorsystems. Das Deflektometrie-Sensorsystem gemäß Fig. 1 umfasst einen Deflektometrie-Sensor 1. Der Deflektometrie-Sensor 1 umfasst einen Bildschirm 2 als Bilderzeugungseinrichtung zur Erzeugung eines Bildmusters. Des Weiteren umfasst der Deflektometrie-Sensor 1 eine Kamera 3 als Erfassungselement einer Erfassungseinrichtung. Die Kamera 3 nimmt das Spiegelbild des durch das Messobjekt 4 - reflektierten Bildmusters auf. Das Messobjekt 4 weist eine glänzende bzw. spiegelnde Oberfläche auf.

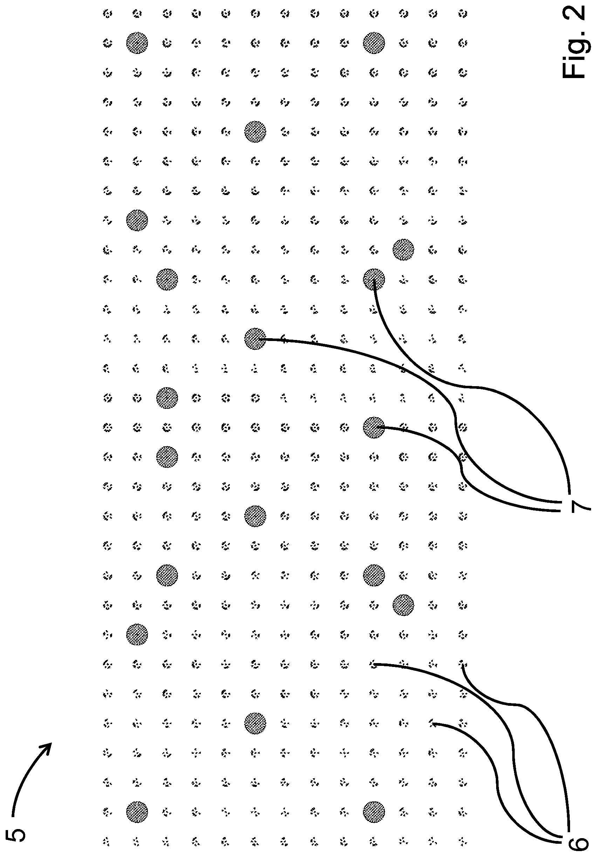

Fig. 2 zeigt in einer schematischen Draufsicht ein Ausführungsbeispiel einer erfindungsgemäßen Referenzplatte. Die in Fig. 2 dargestellte Referenzplatte 5 weist auf ihrer Oberfläche ein vordefiniertes - Markierungen umfassendes - Muster auf. Das vordefinierte Muster besteht aus codierten Marken 6, die in Form eines regelmäßigen Rasters angeordnet sind. Anstelle einiger codierter Marken sind Siemenssterne 7 als Markierungen angeordnet. Die in einer Draufsicht gezeigte Referenzplatte 5 ist für die Kalibrierung eines Deflektometrie-Sensors mit vier Kameras ausgelegt.

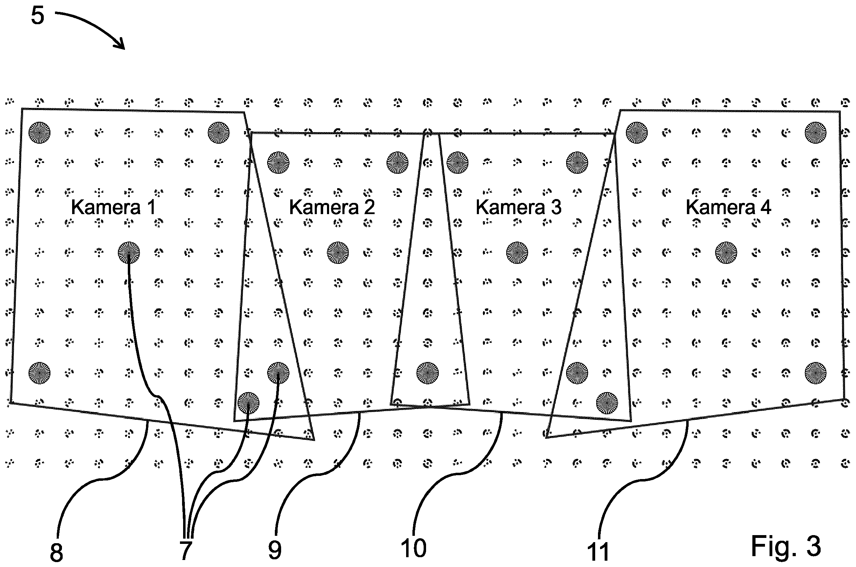

Fig. 3 zeigt in einer schematischen Draufsicht das Ausführungsbeispiel gemäß Fig. 2, wobei mehrere Markierungsgruppen auf der beispielhaften Referenzplatte 5 dargestellt sind. Fig. 3 zeigt die Gruppierung der Siemenssterne 7 in einer Markierungsgruppe je nach Kamera. Jeweils vier Siemenssterne 7 sind so angeordnet, dass sie im Sichtfeld einer Kamera liegen. Die erste Markierungsgruppe 8 ist für die erste Kamera, die zweite Markierungsgruppe 9 für die zweite Kamera, die dritte Markierungsgruppe 10 für die dritte Kamera und die vierte Markierungsgruppe 11 für die vierte Kamera. Die Siemenssterne 7 sind dabei so angeordnet, dass eine perspektivische Verzerrung durch die Bildaufnahme berücksichtigt ist.

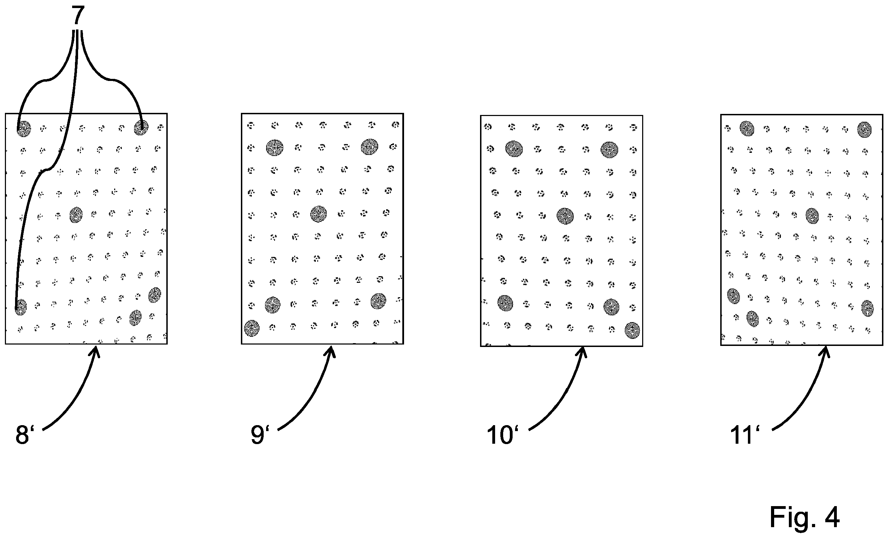

Fig. 4 zeigt in schematischer Ansicht vier Bilder der Referenzplatte 5 gemäß Fig. 2 bzw. gemäß Fig. 3, die jeweils mit einer Kamera eines vier Kameras umfassenden Deflektometrie-Sensorsystems aufgenommen worden sind. Im Konkreten zeigt Fig. 4 die Bilder 8', 9', 10' und 11' der jeweiligen Kamera. Das Bild 8' bildet die Markierungsgruppe 8 gemäß Fig. 3 ab. Das Bild 9' bildet die Markierungsgruppe 9 gemäß Fig. 3 ab. Das Bild 10' bildet die Markierungsgruppe 10 gemäß Fig. 3 ab. Das Bild 11' bildet die Markierungsgruppe 11 gemäß Fig. 3 ab. Durch die perspektivische Anordnung der Siemensterne 7 auf der Referenzplatte erscheinen diese im Kamerabild jeweils an den Ecken, so dass das gesamte Kamerabild der Kameras zur Kalibrierung verwendet werden kann.

Gemäß der Erfindung wird eine Prüfung der Funktionsfähigkeit eines Deflektometrie-Sensorsystems mittels einer speziell dafür entwickelten Referenzplatte als Referenztarget durchgeführt. Dabei wird der Deflektometrie-Sensor - umfassend einen Bildschirm als Bilderzeugungseinrichtung und einer Erfassungseinrichtung mit mehreren Kameras als Erfassungselemente - vor der Referenzplatte in einem definierten Abstand positioniert und für jede Kamera ein Bild aufgenommen, das dann im Anschluss ausgewertet und bewertet wird. Die Anordnung entspricht der Deflektometrie-Bedingung, d. h. die Referenzplatte ist so positioniert, dass die Pixel/Bildpunkte des Bildschirms in spiegelnder Anordnung - Einfallswinkel gleich Ausfallswinkel - auf die Kameras abgebildet werden.

Die Referenzplatte umfasst einen Oberflächenspiegel, der mit einem vordefinierten Muster versehen ist, das an verschiedenen Positionen Markierungen aufweist. Das vordefinierte Muster wird zur Prüfung verschiedener Systemparametergrößen verwendet. Das vordefinierte Muster auf der Referenzplatte kann beispielsweise aus einer Kombination von codierten Marken und Siemenssternen bestehen.

Die codierten Marken werden gemäß einem Ausführungsbeispiel zur Bestimmung der 3D-Position der Kameras (3x Rotation, 3x Translation) verwendet. Die Siemenssterne werden zur Bestimmung der Schärfe, des Kontrasts und der Sichtbereiche verwendet, wobei die Siemensterne so angeordnet sind, dass pro Kamera ein Stern in der Mitte und in den vier Ecken des durch eine Kamera aufgenommenen Bildes vorhanden ist.

Die Helligkeit kann über die nicht bedruckten Bereiche des Spiegels ermittelt werden, indem das vom Bildschirm erzeugte Bild in der spiegelnden Oberfläche der Referenzplatte betrachtet wird.

Für die Kalibrierung der Kameras der Erfassungseinrichtung des Deflektometrie-Sensors wird zunächst der Bildschirm mit homogener Helligkeit betrieben, beispielsweise Weiß. Das vordefinierte Muster auf der Referenzplatte wird daher auf einem weißen Hintergrund dargestellt und kann zur Kalibrierung der Kamera einfach ausgewertet werden.

Im Rahmen eines Ausführungsbeispiels der Erfindung kann - zusätzlich zur Verwendung von Markierungen auf der Referenzplatte - die Verwendung von Markierungen (Muster) oder Mustersequenzen auf der Bilderzeugungseinrichtung für Überwachungszwecke und/oder zur Kalibrierung der Position der Bilderzeugungseinrichtung eingesetzt werden.

In beispielhafter Weise kann aus deflektometrischen Messungen mit verschiedenen Streifenbreiten (Schwebungsaufnahmen) eine Korrespondenz zwischen Kamera- und Bildschirmpixel hergestellt werden. D. h. für jeden Bildpunkt der Kamera kennt man die zugehörige Position auf dem Bildschirm. Diese Pixelpositionen können, umgerechnet in eine metrische Einheit, zusätzlich zu Markierungen auf der Referenzplatte für die Kamerakalibrierung verwendet und somit intrinsische und/oder extrinsische Kameraparameter bzgl. der virtuellen Bildschirmposition (geradliniger Strahlengang) ermittelt werden. Mit Hilfe der Markierungen auf der Referenzplatte lässt sich die reale Position der Referenzplatte ermitteln, und damit schließlich auch die reale Position des Bildschirms.

Sind zusätzlich die geometrischen Eigenschaften der Referenzplatte bekannt, kann das deflektometrische Messergebnis der Referenzplatte selbst im Sinne einer Referenzmessung für die Überwachung und Kalibrierung der deflektometrischen Einheit verwendet werden. Ist die Referenzplatte beispielsweise ein (nahezu) perfekter Planspiegel, so kann unter der Nebenbedingung der Ebenheit aus den bekannten Positionen der Markierungen die relative Positionen von Bildschirm und Kamera überwacht und/oder kalibriert werden.

Zur Bewertung der verschiedenen Prüfkriterien werden Sollwerte und Toleranzen abgeprüft, innerhalb derer die Messwerte liegen müssen, um als "in Ordnung" bzw. akzeptabel bewertet zu werden. Liegen ermittelte Messwerte des Deflektometrie-Sensorsystems außerhalb der vorgegebenen Toleranzen, wird das Deflektometrie-Sensorsystem als "nicht in Ordnung" qualifiziert und kann so nicht weiter verwendet werden.

In einem zweiten Schritt kann auf dem Bildschirm ein definiertes Bildmuster erzeugt werden, das über die Referenzplatte gespiegelt und von der Erfassungseinrichtung bzw. deren Kameras als Erfassungselemente aufgenommen wird. Über die Spiegelung des vom Bildschirm dargestellten Bildmusters kann dann die Relativposition von Bildschirm und Kameras zueinander kalibriert werden.

Der Vorteil dieser Methode liegt darin, mit einer Bildaufnahme pro Kamera sämtliche zu überprüfenden Systemparameter bestimmen zu können, wodurch eine schnelle und einfache Prüfung des Deflektometrie-Sensorsystems zum Beispiel in der Fertigungslinie möglich ist.

Verwendet man nicht-planare Ausführungen der Referenzplatte, d. h. ein Ausführungsbeispiel der Referenzplatte, das insbesondere Markierungen - wie beispielsweise codierte Marken und/oder Siemenssterne - in unterschiedlichen Höhen auf der Oberfläche der Referenzplatte aufweist oder führt man die zur Funktionsprüfung beschriebenen Aufnahmen aus mehreren Relativpositionen zwischen Deflektometrie-Sensor und Referenzplatte durch, so ist neben der Bestimmung von externen Kameraparametern, zum Beispiel 3D-Position und 3D-Orientierung der Kameras (3 x Rotation, 3 x Translation), auch eine Bestimmung der internen Kameraparameter möglich. Folglich kann eine vollständige Kalibrierung des optischen Systems und - zudem - des kompletten Deflektometrie-Sensorsystems realisiert werden.

Ein beispielhafter Prozedurablauf der Funktionsprüfung gemäß einem Ausführungsbeispiel des erfindungsgemäßen Verfahrens kann wie folgt durchgeführt werden:

1. Der Deflektometrie-Sensor (umfassend einen Bildschirm als Bilderzeugungseinrichtung und mehrere Kameras als Erfassungselemente der Erfassungseinrichtung) und die Referenzplatte werden mit einem vordefinierten Abstand zueinander und mit einer vordefinierten Neigung positioniert.

2. Darstellung eines weißen Bildes auf dem Bildschirm des Deflektometrie-Sensors.

3. Mit allen Kameras des Deflektometrie-Sensors werden Aufnahmen der Referenzplatte angefertigt.

4. Prüfung der Schärfe. Liegt der Schärfewert der Erfassungseinrichtung des Deflektometrie-Sensors außerhalb eines vorgebbaren Betriebsbereichs, kann der Deflektometrie-Sensor nicht weiter betrieben werden.

5. Prüfung der Sichtbereiche. Liegen die Abweichungen der Sichtbereiche der Erfassungseinrichtung des Deflektometrie-Sensors außerhalb eines vorgebbaren Betriebsbereichs, kann der Deflektometrie-Sensor nicht weiter betrieben werden.

6. Prüfung der Helligkeit. Liegt die Helligkeit des Bildschirms des Deflektometrie-Sensors außerhalb eines vorgebbaren Betriebsbereichs, so wird der Bildschirm nachkalibriert.

7. Prüfung der Position der Kameras der Erfassungseinrichtung. Liegt eine Kameraposition außerhalb eines vorgebbaren Betriebsbereichs, kann der Deflektometrie-Sensor nicht weiter betrieben werden.

8. Prüfung der Roboterkorrektur. Führt die berechnete Korrektur zu einer besseren Position des Sensors vor der Referenzplatte und liegt innerhalb eines vorgebbaren Betriebsbereichs, wird der Roboter, auf dem der Deflektometrie-Sensor montiert ist, neu korrigiert. Liegt die Korrektur außerhalb eines vorgebbaren Betriebsbereichs, kann der Deflektometrie-Sensor nicht weiter betrieben werden.

9. Ausgabe von Warnsignalen, wenn ein Tausch des Deflektometrie-Sensors bevorsteht, bzw. Ausgabe von Fehlersignalen, wenn der Deflektometrie-Sensor nicht mehr weiter betrieben werden kann.

Diese Prozedur kann in vorteilhafter Weise in regelmäßigen Zeitintervallen wie zum Beispiel 1-mal pro Tag durchgeführt werden.

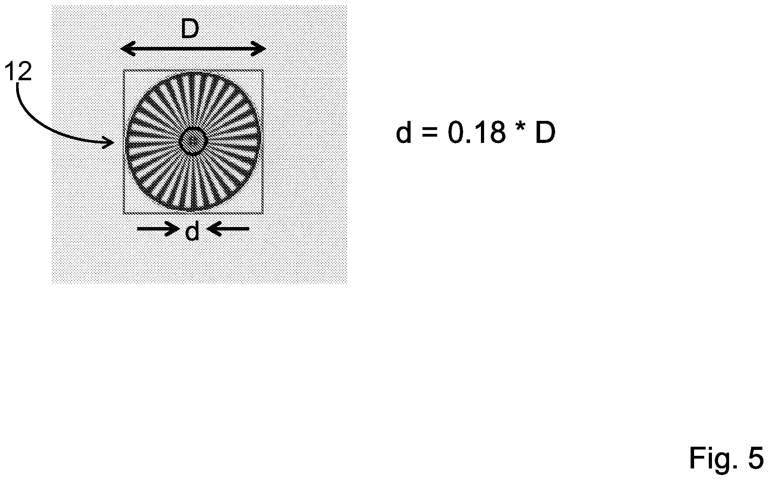

Im Folgenden werden die einzelnen Prüfungsschritte gemäß einem Ausführungsbeispiel des erfindungsgemäßen Verfahrens und anhand von Fig. 5 bis Fig. 12 beschrieben:

Schärfeprüfung:

Zur Überprüfung der Schärfe des Deflektometrie-Sensors werden die Schärfewerte aller Siemensterne jeder Kamera ausgewertet. In vorteilhafter Weise erfolgt dies automatisch.

Die - als Markierungen auf der Oberfläche der Referenzplatte angeordneten - Siemenssterne sind so aufgebaut, dass jeder Siemensstern eine feste Anzahl von Segmenten aufweist. Je schärfer das durch eine Kamera aufgenommene Bild ist, desto weiter nach innen sind die einzelnen Segmente sichtbar. Somit kann ein Maß für die Schärfe 1 minus das Verhältnis des Radius, bei dem noch alle Segmente des Siemenssterns eindeutig erkannt werden können (von außen nach innen), zum Radius des Siemenssterns sein. Der Wertebereich der Schärfe kann somit von 0% (ganz außen) bis 100% (ganz innen) sein.

Durch Umrechnung des Schärfewertes in Prozent in einen Wert, der unabhängig von der Größe des Siemenssterns ist, können verschieden große Siemenssterne zur Beurteilung der Schärfe herangezogen werden. Eine entsprechende Berechnung ergibt sich wie folgt:

$$Lp/mm\,(\text{Linienpaare/Millimeter}) = \frac{\text{Anzahl Segmente}}{Pi * \text{Schärfewert}[\%] * \text{Durchmesser}}$$

Fig. 5 zeigt einen beispielhaften Siemensstern 12 für ein Ausführungsbeispiel einer erfindungsgemäßen Referenzplatte und zur Schärfeprüfung gemäß einem Ausführungsbeispiel des erfindungsgemäßen Verfahrens, wobei der nicht mehr aufgelöste, unscharfe Bereich d dort 18 Prozent des Gesamtbereichs D beträgt.

Zur Beurteilung der Gesamt-Schärfe einer Kamera, d. h. einem Erfassungselement der Erfassungseinrichtung, kann beispielsweise das Minimum der Schärfewerte aller "sichtbaren" Siemenssterne der Kamera verwendet werden. Mit "sichtbar" sind hier diejenigen Siemenssterne gemeint, die durch das aufgenommene Bild der Kamera detektiert werden können.

Sichtbereichsprüfung:

Die Überprüfung der Sichtbereiche kann durch die Überwachung der Siemenssternpositionen erfolgen. Die Sollpositionen werden beispielsweise durch ein CAD-Modell vorgegeben.

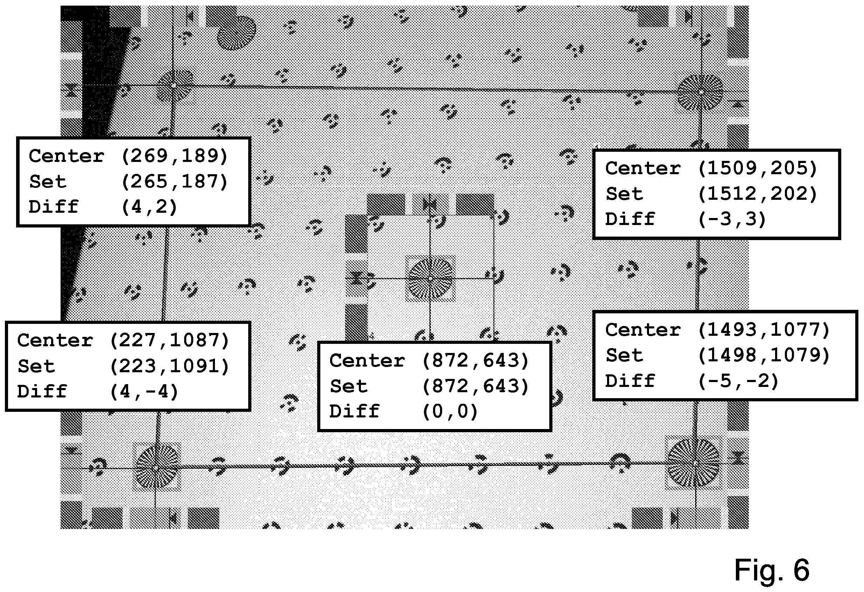

Fig. 6 zeigt in einer schematischen Ansicht eine Veranschaulichung einer Sichtbereichsprüfung gemäß einem Ausführungsbeispiel des erfindungsgemäßen Verfahrens.

Kamerapositionsprüfung:

Zur Bestimmung der Position einer Kamera werden die auf der Referenzplatte angeordneten codierten Marken herangezogen. In vorteilhafter Weise werden diese automatisch detektiert.

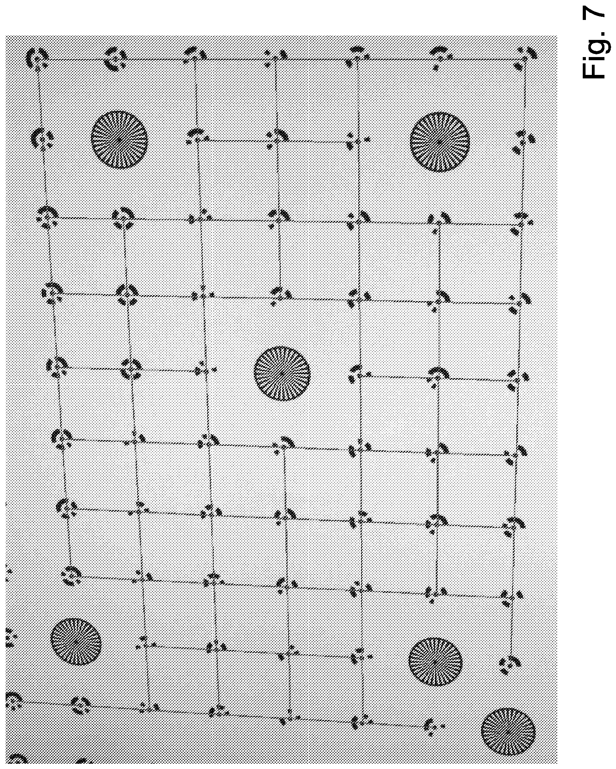

Fig. 7 zeigt in einer schematischen Ansicht eine Veranschaulichung einer Kamerapositionsprüfung gemäß einem Ausführungsbeispiel des erfindungsgemäßen Verfahrens.

Da die realen bzw. tatsächlichen Koordinaten der codierten Marken - aufgrund der durch den Code eindeutigen Nummerierung - auf der Referenzplatte bekannt sind, lässt sich mit Hilfe der vorher kalibrierten Kamera die aktuelle 3D-Lage der Referenzplatte bzgl. der Kamera bestimmen. Dies kann zur Überwachung bzw. Überprüfung der Kameraposition verwendet werden, da die Referenzplatte und auch die Roboterposition ortsfest gehalten werden.

**Roboterkorrekturprüfung**:

Zur Bestimmung einer Roboterkorrektur, um Montage und Fertigungstoleranzen zu kompensieren, können die detektierten codierten Marken aller Kameras der Erfassungseinrichtung des Deflektometrie-Sensors herangezogen werden. Dazu werden alle codierten Marken mit Hilfe der Informationen aus Kamerakalibrierung und aktuell bestimmter Kameraposition in ein gemeinsames Koordinatensystem überführt.

Die zu berechnende Lösung eines Minimierungsproblems liefert dann eine Transformation, die alle codierten Marken im Raum bestmöglich auf die ideale CAD-Position abbilden. Diese Transformation wird als Korrektur im Roboter hinterlegt, um den Deflektometrie-Sensor bestmöglich auszurichten.

Helligkeitsprüfung:

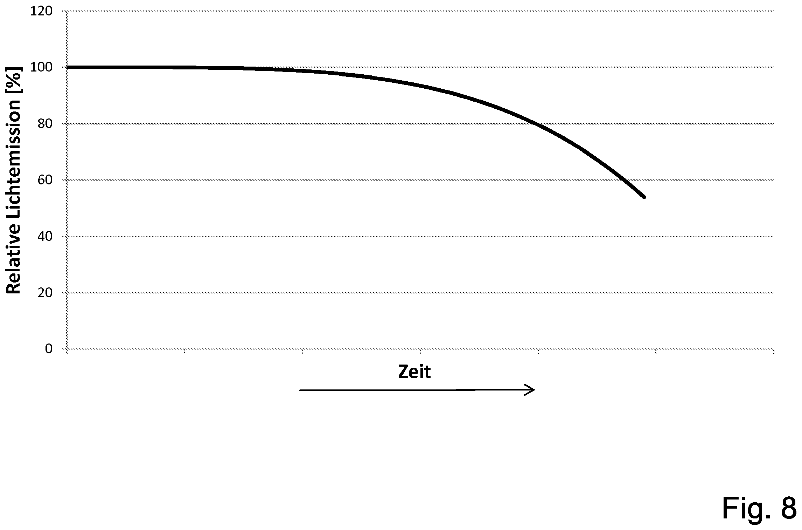

Um bei einer deflektometrischen Messung reproduzierbare Ergebnisse zu erhalten, sollte die Helligkeit des Bildschirms annähernd konstant sein. Aufgrund der Alterung eines Bildschirms nimmt die Helligkeit im Laufe der Zeit ab. Dies ist beispielhaft in Fig. 8 dargestellt. Fig. 8 zeigt ein Diagramm zur Veranschaulichung der Alterung eines Bildschirms in Bezug auf die relative Lichtemission, wobei die relative Lichtemission in Prozent gegen die Zeit aufgetragen ist.

Je größer die Helligkeitsschwankungen im Laufe der Zeit sind, umso höher sind der Parametrieraufwand und das Auftreten von Messfehlern.

Daher wird das Backlight des Bildschirms eines Deflektometrie-Sensors so eingestellt, dass die Helligkeit in der Mitte des Bildschirms einen vergebbaren Sollwert, der nicht der maximalen Helligkeit entspricht, annimmt. In regelmäßigen Abständen wird die Helligkeit kontrolliert werden und der durch die Alterung verursachte Helligkeitsabfall durch eine Erhöhung der Backlight-Helligkeit ausgeglichen werden. Hierzu sind in der Praxis ein externes Messgerät sowie viele manuelle Schritte notwendig.

Besonders bei den Sensoren in der Lackfehlerkontrolle ist dies im produktiven Einsatz in der Linie mit erheblichem Aufwand verbunden. So muss beispielsweise

- der Karosseneinlauf gesperrt werden,
- die Messzelle betreten werden,
- der Deflektometrie-Sensor am Roboter in eine Wartungsposition gefahren werden,
- eine längere Wartezeit zum Ausgleich von lagebedingten Helligkeitsschwankungen eingehalten werden,
- ein Helligkeitsmessgerät auf den Bildschirm aufgelegt werden,
- eine Verbindung zwischen Bildschirm und einem Laptop hergestellt werden,
- die Helligkeit durch eine Software unter Berücksichtigung des Helligkeitsmessgeräts durch einen zu verbindenden Laptop oder an Menütasten am Bildschirm eingestellt werden,
- die Messzelle wieder verlassen werden,
- der Roboter zurück auf eine Home-Position gefahren werden
- und der Karosseneinlauf wieder freigegeben werden.

Für diesen Ablauf werden mindestens 30 Minuten pro Sensor benötigt. Da dies während der laufenden Produktion kaum möglich ist, sind dafür teilweise Wochenendeinsätze nötig. Eine Nachkalibrierung der Helligkeit ist deswegen nur in größeren Zeitabständen möglich.

Daraus ergibt sich die Anforderung, die Bildschirmhelligkeit in kurzen Abständen automatisiert nachstellen zu können, ohne dafür die Produktion unterbrechen zu müssen.

Zur Prüfung der Funktionsfähigkeit des Deflektometrie-Sensorsystems wird, zum Beispiel täglich, der zuvor beschriebene Prozedurablauf als "Sensorcheck" durchgeführt. Im Rahmen der Funktionsprüfung wird zur Helligkeitsprüfung für jede Kamera des Deflektometrie-Sensors in einem Rechteck in der Mitte des jeweiligen Bilds der mittlere Grauwert in den unbedruckten Bereichen des Spiegels, d. h. der spiegelnden Oberfläche der Referenzplatte, bestimmt. Dieser mittlere Grauwert wird nachfolgend als "Kameragrauwert" bezeichnet.

Die Blenden der Kameraobjektive werden bei der Sensorfertigung so eingestellt, dass bei der Zielhelligkeit des Bildschirms ein definierter Kameragrauwert erreicht wird.

Sinkt die Helligkeit des Bildschirms aufgrund von Alterung des Bildschirms, werden die mit den Kameras - im Rahmen der Funktionsprüfung - aufgenommenen Bilder dunkler und der Kameragrauwert nimmt ab. Wird das Backlight heller eingestellt, steigt die Bildschirmhelligkeit und die durch die Kameras aufgenommenen Bilder werden heller, also nimmt der Kameragrauwert zu. Aufgrund dieses Zusammenhangs zwischen Kameragrauwert, Backlighteinstellung und Bildschirmhelligkeit kann aus den im Rahmen der Funktionsprüfung aufgenommenen Bildern geschlossen werden, ob und wie weit das Backlight nachzujustieren ist, um den alterungsbedingten Helligkeitsabfall des Bildschirms auszugleichen.

Die nachfolgenden, experimentell bestimmten Ergebnisse beziehen sich auf einen aus der Praxis bekannten, beispielhaften Bildschirm mit Bildschirm-Controller, wobei die Kameraobjektive so eingestellt sind, dass eine Bildschirmhelligkeit von 600cd/m$^2$ zu einem Kameragrauwert von 230 führt.

Über den Bildschirm-Controller kann das Backlight eines Bildschirms in 1%-Schritten von 0% bis 100% geregelt werden. Der Bildschirm verfügt über eine maximale Helligkeit von 800cd/m$^2$.

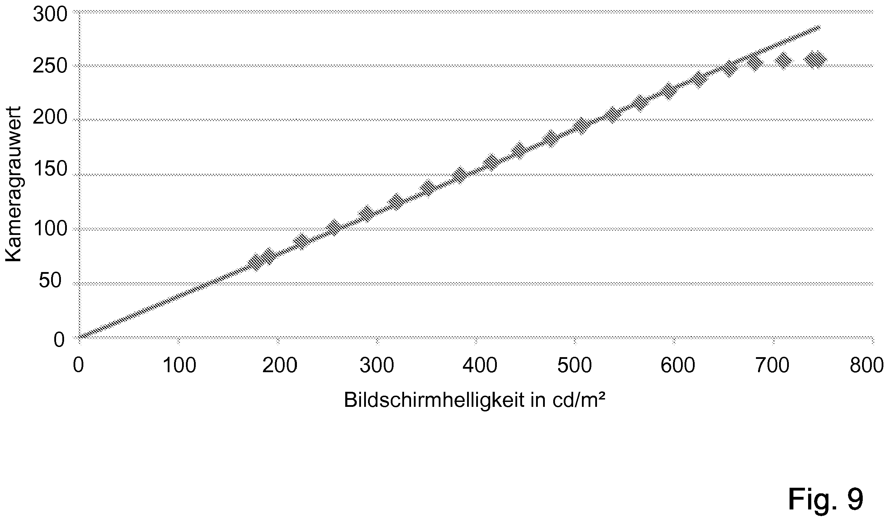

Zwischen dem Kameragrauwert $GW$ und der Bildschirmhelligkeit $DH$ besteht ein linearer Zusammenhang. Dies ist in dem Diagramm gemäß Fig. 9 dargestellt, das zur Veranschaulichung des Zusammenhangs zwischen Kameragrauwert und Bildschirmhelligkeit eines Deflektometrie-Sensors dient. In Fig. 9 ist der Kameragrauwert gegen die Bildschirmhelligkeit in cd/m$^2$ aufgetragen. Ein vollkommen überbelichtetes Kamerabild hat einen Kameragrauwert von 255. Aufgrund der Überbelichtung ist der lineare Zusammenhang nur für Kameragrauwerte im Intervall [0; 250] gültig.

Der lineare Zusammenhang wird durch den Sollgrauwert $GW_{Soll}$ und der Sollhelligkeit $DH_{Soll}$ bestimmt:

$$GW = \frac{GW_{Soll}}{DH_{Soll}} * DH$$

mit $GW_{Soll}$ = 230 und $DH_{Soll}$ = 600cd/m$^2$ bei der verwendeten Konfiguration.

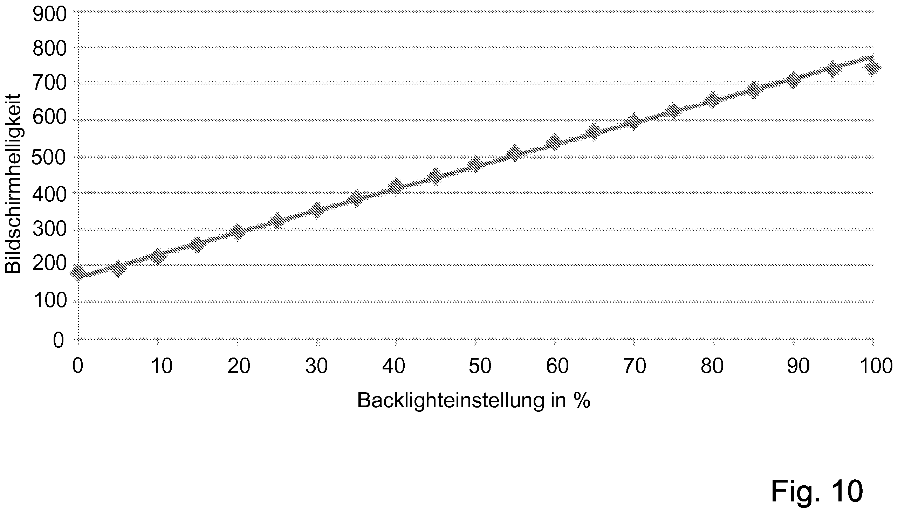

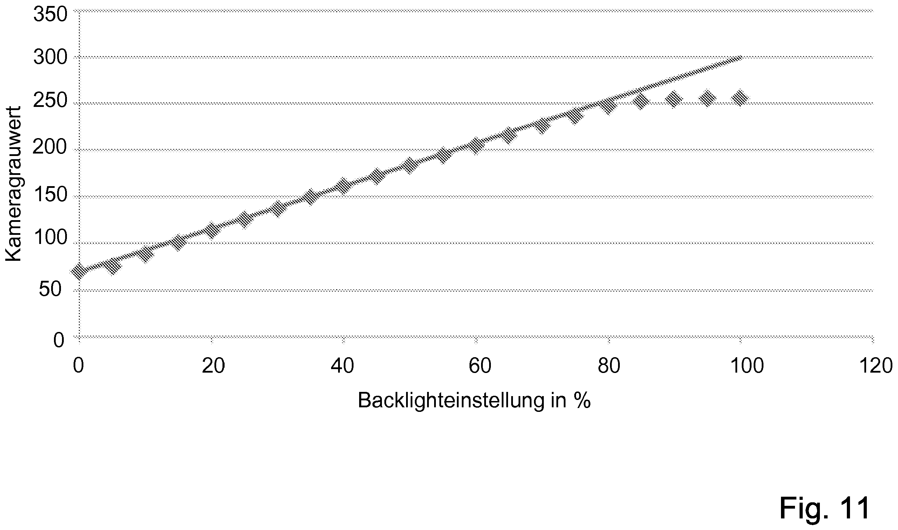

Fig. 10 zeigt ein Diagramm zur Veranschaulichung des Zusammenhangs zwischen Bildschirmhelligkeit und Backlighteinstellung des Bildschirms eines Deflektometrie-Sensors, wobei der Kameragrauwert gegen die Backlighteinstellung in Prozent aufgetragen ist. Gemäß dem Diagramm aus Fig. 10 verhält sich die Backlighteinstellung im Intervall [0%; 95%] linear zur Bildschirmhelligkeit. Bei einer Backlighteinstellung von 0 hat der Bildschirm eine Resthelligkeit von ca. 180cd/m$^2$ (vgl. Fig. 10), die einen Kameragrauwert GWo von etwa 70 verursacht, vgl. Fig. 11. Fig. 11 zeigt ein Diagramm zur Veranschaulichung des Zusammenhangs zwischen Kameragrauwert und Backlighteinstellung des Bildschirms eines Deflektometrie-Sensors, wobei der Kameragrauwert gegen die Backlighteinstellung in Prozent aufgetragen ist.

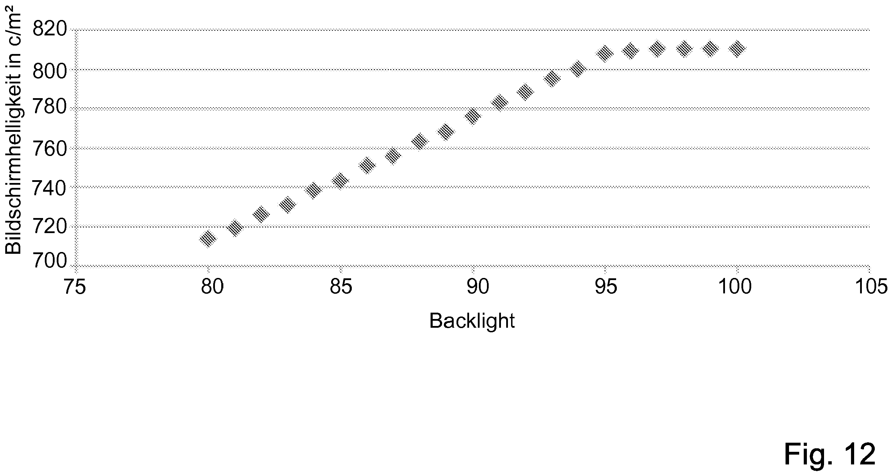

Bei einer Backlighteinstellung von 95% bis 100% ist die Bildschirmhelligkeit annähernd konstant. Dies kann aus dem Diagramm gemäß Fig. 12 entnommen werden, das den Zusammenhang zwischen Bildschirmhelligkeit und Backlighteinstellung im Intervall [80; 100] eines Deflektometrie-Sensors veranschaulicht. In Fig. 12 ist die Bildschirmhelligkeit in cd/m$^2$ gegen das Backlight aufgetragen.

Damit lässt sich die benötigte Backlighteinstellung BLneu für einen Sollgrauwert $GW_{Soll}$ der Kameras in Abhängigkeit vom aktuellen Kameragrauwert GWaktuell, dem Nullgrauwert GWo und von der aktuellen Backlighteinstellung $BL_{aktuell}$ berechnen durch:

$$BL_{neu} = \frac{GW_{Soll} - GW_0}{GW_{aktuell} - GW_0} * BL_{aktuell}$$

mit $GW_{Soll}$ = 230 bei der verwendeten Konfiguration.

Der Bildschirm-Controller verfügt über eine RS232-Schnittstelle, über die die Bildschirmeinstellungen, wie z.B. das Backlight, abgefragt und gesetzt werden können. Durch eine Lichtwellenleiterverbindung kann der Sensor am Roboter mit dem Sensor-PC verbunden werden.

Damit ist es nun möglich, durch die Applikationssoftware im laufenden Betrieb automatisiert und regelmäßig das Backlight des Bildschirms einzustellen und damit den Helligkeitsabfall des Bildschirms zu korrigieren. Da dies im Rahmen der täglichen Funktionsprüfung bzw. Sensorchecks erfolgen kann, ist kein zusätzlicher Zeitaufwand nötig. Außerdem kann automatisiert eine Aufforderung zum Ersetzen des alten Bildschirms abgegeben werden, sobald der Bildschirm soweit gealtert ist, dass die maximale Backlighteinstellung nicht mehr ausreicht, um den Helligkeitsabfall zu kompensieren. Somit kann automatisiert im produktiven Einsatz ein konstantes Messergebnis erzielt werden.

Hinsichtlich weiterer vorteilhafter Ausgestaltungen der erfindungsgemäßen Referenzplatte und des erfindungsgemäßen Verfahrens wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Referenzplatte bzw. des erfindungsgemäßen Verfahrens lediglich zur Erörterung der beanspruchten Lehre dienen, diese jedoch nicht auf die Ausführungsbeispiele einschränken.

Bezugszeichenliste

| | |
|---|---|
| 1 | Deflektometrie-Sensor |
| 2 | Bildschirm |
| 3 | Kamera |
| 4 | Messobjekt |
| 5 | Referenzplatte |
| 6 | Codierte Marke |
| 7 | Siemensstern |
| 8 | Markierungsgruppe |
| 9 | Markierungsgruppe |
| 10 | Markierungsgruppe |
| 11 | Markierungsgruppe |
| 12 | Siemensstern |

8'      Kamerabild
9'      Kamerabild
10'     Kamerabild
11'     Kamerabild


**Patentansprüche**

**1.**  Deflektometrie-Sensorsystem, wobei eine Referenzplatte (5) zur Kalibrierung und/oder Überprüfung des Deflektometrie-Sensorsystems vorgesehen ist,
wobei das Deflektometrie-Sensorsystem konfiguriert ist, ein Verfahren nach einem der Ansprüche 7 bis 14 durchzuführen,
wobei das Deflektometrie-Sensorsystem eine Bilderzeugungseinrichtung (2) und eine Erfassungseinrichtung umfasst,
wobei die Erfassungseinrichtung mehrere Erfassungselemente (3) umfasst, wodurch sich ein größeres Sichtfeld ergibt,
wobei die Referenzplatte der Größe des Sichtfeldes entspricht,
wobei die Referenzplatte (5) eine spiegelnde Oberfläche aufweist,
wobei zur Überprüfung von mindestens einem Systemparameter des Deflektometrie-Sensorsystems die spiegelnde Oberfläche mit einem vordefinierten, Markierungen umfassenden Muster versehen ist, und
wobei das vordefinierte Markierungen umfassende Muster derart ausgebildet ist, dass das vordefinierte Muster mehrere Markierungsgruppen umfasst, und dass für jedes Erfassungselement (3) der Erfassungseinrichtung eine Markierungsgruppe zur Bildaufnahme vorgesehen ist.

**2.**  Deflektometrie-Sensorsystem nach Anspruch 1, **dadurch gekennzeichnet, dass** die Markierungen des vordefinierten Musters zumindest in der Draufsicht in Form eines regelmäßigen Rasters auf der spiegelnden Oberfläche angeordnet sind wobei die Markierungen nicht-planar auf der spiegelnden Oberfläche angeordnet sein können.

**3.**  Deflektometrie-Sensorsystem nach Anspruch 1 oder 2, **dadurch gekennzeichnet, dass** die Markierungen codierte Marken (6) umfassen.

**4.**  Deflektometrie-Sensorsystem nach einem der Ansprüche 1 bis 3, **dadurch gekennzeichnet, dass** die Markierungen vordefinierte Konturkanten und/oder ein vordefiniertes Testchart und/oder Siemenssterne (7) umfassen.

**5.**  Deflektometrie-Sensorsystem nach Anspruch 4, **dadurch gekennzeichnet, dass** die Siemenssterne (7) in dem vordefinierten Muster bzw. in den vom vordefinierten Muster umfassten Markierungsgruppen derart angeordnet sind, dass in jedem Eckbereich eines durch ein Erfassungselement (3) der Erfassungseinrichtung aufnehmbaren Bildes ein Siemensstern (7) vorhanden ist.

**6.**  Deflektometrie-Sensorsystem nach Anspruch 4 oder 5, **dadurch gekennzeichnet, dass** die Siemenssterne (7) in dem vordefinierten Muster bzw. in den vom vordefinierten Muster umfassten Markierungsgruppen derart angeordnet sind, dass im mittleren Bereich eines durch ein Erfassungselement (3) der Erfassungseinrichtung aufnehmbaren Bildes ein Siemensstern (7) vorhanden ist.

**7.**  Verfahren zur Kalibrierung und/oder Überprüfung eines Deflektometrie-Sensorsystems,
wobei das Deflektometrie-Sensorsystem einen Deflektometrie-Sensor mit einer Bilderzeugungseinrichtung (2) und einer Erfassungseinrichtung umfasst,
wobei die Erfassungseinrichtung mehrere Erfassungselemente (3) umfasst, wodurch sich ein größeres Sichtfeld ergibt,
wobei mittels einer Referenzplatte (5) eine Funktionsprüfung des Deflektometrie-Sensorsystems durchgeführt wird,
wobei die Referenzplatte der Größe des Sichtfeldes entspricht,
wobei die Referenzplatte (5) eine spiegelnde Oberfläche aufweist, die mit einem vordefinierten, Markierungen umfassenden Muster versehen ist,
wobei das vordefinierte Markierungen umfassende Muster derart ausgebildet ist, dass das vordefinierte Muster mehrere Markierungsgruppen umfasst, und dass für jedes Erfassungselement (3) der Erfassungseinrichtung eine Markierungsgruppe zur Bildaufnahme vorgesehen ist,
wobei der Deflektometrie-Sensor vor der Referenzplatte in einem definierten Abstand positioniert und mit jedem Erfassungselement (3) der Erfassungseinrichtung ein Bild von der Referenzplatte (5) aufgenommen wird,

wobei anhand des aufgenommenen Bildes bzw. anhand der aufgenommenen Bilder mindestens ein Systemparameter des Deflektometrie-Sensorsystems bestimmt bzw. überprüft wird.

8. Verfahren nach Anspruch 7, **dadurch gekennzeichnet, dass** die Referenzplatte (5) zur Funktionsprüfung derart angeordnet wird, dass von der Bilderzeugungseinrichtung (2) umfasste Bildpunkte über die Referenzplatte (5) auf die Erfassungseinrichtung abgebildet werden, wobei die Referenzplatte (5) in einem vordefinierten Abstand zur Erfassungseinrichtung positioniert wird.

9. Verfahren nach Anspruch 7 oder 8, **dadurch gekennzeichnet, dass** die Bilderzeugungseinrichtung (2) mit homogener Helligkeit betrieben wird, wobei vorzugsweise ein weißes Bild erzeugt wird.

10. Verfahren nach einem der Ansprüche 7 bis 9, **dadurch gekennzeichnet, dass** das mit dem Erfassungselement (3) bzw. das mit den Erfassungselementen (3) jeweils aufgenommene Bild eine Markierungen umfassende Markierungsgruppe umfasst, wobei anhand der mit dem Bild aufgenommenen Markierungsgruppe der mindestens eine Systemparameter des Deflektometrie-Sensorsystems bestimmt wird.

11. Verfahren nach einem der Ansprüche 7 bis 10, **dadurch gekennzeichnet, dass** Systemparameter des Deflektometrie-Sensorsystems
mindestens einen Schärfeparameter,
mindestens einen Sichtbereichsparameter,
mindestens einen Helligkeitsparameter,
mindestens einen Positionsparameter und/oder
mindestens einen Roboterkorrekturparameter umfassen.

12. Verfahren nach Anspruch 11, **dadurch gekennzeichnet,**
**dass** zur Ermittlung des Schärfeparameters eines Erfassungselements (3) der Erfassungseinrichtung Schärfewerte von Siemenssternen (7) des vordefinierten Musters, insbesondere von Siemenssternen (7) innerhalb einer Markierungsgruppe, detektiert bzw. ausgewertet werden und/oder
**dass** zur Ermittlung des Sichtbereichsparameters eines Erfassungselements (3) der Erfassungseinrichtung Positionen von Siemenssternen (7) des vordefinierten Musters, insbesondere von Siemenssternen (7) innerhalb einer Markierungsgruppe, detektiert bzw. ausgewertet werden und/oder
**dass** zur Ermittlung des Helligkeitsparameters eines Erfassungselements (3) der Erfassungseinrichtung eine Grauwertbestimmung in einem vorgebbaren, vorzugsweise mittleren, Bildbereich des durch das Erfassungselement (3) erfassten Bildes durchgeführt wird, wobei der Bildbereich vorzugsweise derart ausgewählt wird, dass in dem Bildbereich keine Markierungen des vordefinierten Musters vorhanden sind und/oder
**dass** zur Ermittlung des Positionsparameters eines Erfassungselements (3) Positionen von codierten Marken (6) des vordefinierten Musters, insbesondere von codierten Marken (6) innerhalb einer Markierungsgruppe, detektiert bzw. ausgewertet werden und/oder
**dass** zur Ermittlung des Roboterkorrekturparameters, insbesondere zur Ermittlung einer 3D-Transformation als Roboterkorrekturparameter, Abstände zwischen Soll-Position und aktueller Position der codierten Marken (6) bestimmt werden, wobei mittels eines Minimierungsalgorithmus der Roboterkorrekturparameter bzw. die 3D-Transformation berechnet wird.

13. Verfahren nach einem der Ansprüche 7 bis 12, **dadurch gekennzeichnet, dass** zur Helligkeitskorrektur des Deflektometrie-Sensorsystems eine neue Helligkeitseinstellung der Bilderzeugungseinrichtung (2) zum Erreichen eines Sollgrauwerts der Erfassungseinrichtung aus einem mit vordefinierter Helligkeitseinstellung der Bilderzeugungseinrichtung (2) aufgenommenen Grauwert der Erfassungseinrichtung berechnet wird.

14. Verfahren nach einem der Ansprüche 7 bis 13, **dadurch gekennzeichnet, dass** auf der Bilderzeugungseinrichtung (2) ein vordefiniertes Muster und/oder eine vordefinierte Mustersequenz erzeugt wird.

**Claims**

1. Deflectometry sensor system, wherein a reference plate (5) is provided for calibrating and/or checking the deflectometry sensor system,
wherein the deflectometry sensor system is configured to carry out a method according to any one of claims 7 to 14, wherein the deflectometry sensor system comprises an image production device (2) and a detection device,

wherein the detection device comprises a plurality of detection elements (3), whereby a larger field of vision is produced,

wherein the reference plate corresponds to the size of the field of vision,

wherein the reference plate (5) has a reflective surface, wherein in order to check at least one system parameter of the deflectometry sensor system the reflective surface is provided with a predefined pattern which comprises markings, and

wherein the predefined pattern which comprises markings is constructed in such a manner that the predefined pattern comprises a plurality of marking groups and for each detection element (3) of the detection device a marking group is provided for recording images.

2. Deflectometry sensor system according to claim 1, **characterised in that** the markings of the predefined pattern at least when viewed from above are arranged in the form of a regular grid on the reflective surface, wherein the markings may be arranged in a non-planar manner on the reflective surface.

3. Deflectometry sensor system according to claim 1 or claim 2, **characterised in that** the markings comprise encoded marks (6).

4. Deflectometry sensor system according to any one of claims 1 to 3, **characterised in that** the markings comprise predefined contour edges and/or a predefined test chart and/or Siemens stars (7).

5. Deflectometry sensor system according to claim 4, **characterised in that** the Siemens stars (7) are arranged in the predefined pattern or in the marking groups included by the predefined pattern in such a manner that a Siemens star (7) is provided in each corner region of an image which can be recorded by a detection element (3) of the detection device.

6. Deflectometry sensor system according to claim 4 or claim 5, **characterised in that** the Siemens stars (7) are arranged in the predefined pattern or in the marking groups included by the predefined pattern in such a manner that a Siemens star (7) is provided in the central region of an image which can be recorded by a detection element (3) of the detection device.

7. Method for calibrating and/or checking a deflectometry sensor system,

wherein the deflectometry sensor system comprises a deflectometry sensor with an image production device (2) and a detection device,

wherein the detection device comprises a plurality of detection elements (3), whereby a larger field of vision is produced,

wherein by means of a reference plate (5) a functional check of the deflectometry sensor system is carried out,

wherein the reference plate corresponds to the size of the field of vision,

wherein the reference plate (5) has a reflective surface which is provided with a predefined pattern which comprises markings,

wherein the pattern which comprises predefined markings is constructed in such a manner that the predefined pattern comprises a plurality of marking groups and for each detection element (3) of the detection device a marking group is provided for recording images,

wherein the deflectometry sensor is positioned in front of the reference plate at a defined spacing and with each detection element (3) of the detection device an image of the reference plate (5) is recorded,

wherein with reference to the recorded image or with reference to the recorded images at least one system parameter of the deflectometry sensor system is determined or checked.

8. Method according to claim 7, **characterised in that** the reference plate (5) for functional checking is arranged in such a manner that image points included by the image production device (2) are depicted via the reference plate (5) on the detection device, wherein the reference plate (5) is positioned with a predefined spacing with respect to the detection device.

9. Method according to claim 7 or 8, **characterised in that** the image production device (2) is operated with homogeneous brightness, wherein a white image is preferably produced,

10. Method according to any one of claims 7 to 9, **characterised in that** the image recorded in each case with the detection element (3) or with the detection elements (3) comprises a marking group which comprises markings, wherein, with reference to the marking group which has been recorded with the image, the at least one system parameter of the deflectometry sensor system is determined.

11. Method according to any one of claims 7 to 10, **characterised in that** system parameters of the deflectometry sensor system comprise
at least one sharpness parameter,
at least one viewing region parameter,
at least one brightness parameter,
at least one position parameter and/or
at least one robot correction parameter.

12. Method according to claim 11, **characterised in that**,
in order to establish the sharpness parameter of a detection element (3) of the detection device, sharpness values of Siemens stars (7) of the predefined pattern, in particular of Siemens stars (7) within a marking group, are detected or evaluated and/or,
in order to establish the viewing field parameter of a detection element (3) of the detection device, positions of Siemens stars (7) of the predefined pattern, in particular of Siemens stars (7) within a marking group, are detected or evaluated and/or,
in order to establish the brightness parameter of a detection element (3) of the detection device, a grey value determination in a predeterminable, preferably central image region of the image detected by the detection element (3) is carried out, wherein the image region is preferably selected in such a manner that in the image region no markings of the predetermined pattern are present and/or,
in order to establish the position parameter of a detection element (3), positions of encoded marks (6) of the predefined pattern, in particular of encoded marks (6) within a marking group, are detected or evaluated and/or,
in order to establish the robot correction parameter, in particular in order to establish a 3D transformation as a robot correction parameter, spacings between the desired position and current position of the encoded marks (6) are determined, wherein by means of a minimisation algorithm the robot correction parameter or the 3D transformation is calculated.

13. Method according to any one of claims 7 to 12, **characterised in that**, in order to correct the brightness of the deflectometry sensor system, a new brightness adjustment of the image production device (2) in order to achieve a desired grey value of the detection device is calculated from a grey value of the detection device recorded with predefined brightness adjustment of the image production device (2).

14. Method according to any one of claims 7 to 13, **characterised in that** a predefined pattern and/or a predefined pattern sequence is produced on the image production device (2).

**Revendications**

1. Système de capteurs de déflectométrie, dans lequel une plaque de référence (5) est prévue pour le calibrage et/ou la vérification du système de capteurs de déflectométrie,
dans lequel le système de capteurs de déflectométrie est conçu pour exécuter un procédé selon l'une des revendications 7 à 14,
dans lequel le système de capteurs de déflectométrie comprend un dispositif de formation d'images (2) et un dispositif d'acquisition,
dans lequel le dispositif d'acquisition comprend plusieurs éléments d'acquisition (3), ce qui permet d'obtenir un champ de vision plus grand,
dans lequel la plaque de référence correspond à la taille du champ de vision,
dans lequel la plaque de référence (5) présente une surface réfléchissante,
dans lequel, pour la vérification d'au moins un paramètre du système de capteurs de déflectométrie, la surface réfléchissante est munie d'un motif prédéfini comprenant des repères et
dans lequel le motif prédéfini comprenant des repères est conçu de façon à ce que le motif prédéfini comprenne plusieurs groupes de repère et à ce que, pour chaque élément d'acquisition (3) du dispositif d'acquisition, un groupe de repères soit prévu pour une prise de vue.

2. Système de capteurs de déflectométrie selon la revendication 1, **caractérisé en ce que** les repères du motif prédéfini sont disposés, au moins en vue de dessus, sous la forme d'une trame régulière sur la surface réfléchissante, dans lequel les repères ne peuvent être disposés de manière non planaire sur la surface réfléchissante.

**3.** Système de capteurs de déflectométrie selon la revendication 1 ou 2, **caractérisé en ce que** les repères comprennent des repères codés (6).

**4.** Système de capteurs de déflectométrie selon l'une des revendications 1 à 3, **caractérisé en ce que** les repères comprennent des arêtes de contour prédéfinies et/ou une mire de test prédéfinie et/ou des mires de Siemens (7).

**5.** Système de capteurs de déflectométrie selon la revendication 4, **caractérisé en ce que** les mires de Siemens (7) sont disposées dans le motif prédéfini respectivement dans les groupes de repères inclus dans le motif prédéfini de façon à ce que, à chaque angle d'une image pouvant être enregistrée par un élément d'acquisition (3) du dispositif d'acquisition, une mire de Siemens (7) soit prévue.

**6.** Système de capteurs de déflectométrie selon la revendication 4 ou 5, **caractérisé en ce que** les mires de Siemens (7) sont disposées dans le motif prédéfini respectivement dans les groupes de repères inclus dans le motif prédéfini de façon à ce que, dans la partie centrale d'une image pouvant être prise par un élément d'acquisition (3) du dispositif d'acquisition, une mire de Siemens (7) soit prévue.

**7.** Procédé de calibrage et/ou de vérification d'un système de capteurs de déflectométrie,
dans lequel le système de capteurs de déflectométrie comprend un capteur de déflectométrie avec un dispositif de formation d'images (2) et un dispositif d'acquisition,
dans lequel le dispositif d'acquisition comprend plusieurs éléments d'acquisition (3), ce qui permet d'obtenir un champ de vision plus grand,
dans lequel, au moyen d'une plaque de référence (5), un contrôle du fonctionnement du système de capteur de déflectométrie est effectué,
dans lequel la plaque de référence correspond à la taille du champ de vision, dans lequel la plaque de référence (5) présente une surface réfléchissante qui est munie d'un motif comprenant des repères prédéfinis,
dans lequel le motif prédéfini comprenant des repères est conçu de façon à ce que le motif prédéfini comprenne plusieurs groupes de repère et à ce que, pour chaque élément d'acquisition (3) du dispositif d'acquisition, un groupe de repères soit prévu pour une prise de vue,
dans lequel le capteur de déflectométrie est positionné avant la plaque de référence à une distance prédéfinie et, avec chaque élément d'acquisition (3) du dispositif d'acquisition, une image est enregistrée par la plaque de référence (5),
dans lequel, à l'aide de l'image enregistrée respectivement à l'aide des images enregistrées, au moins un paramètre du système de capteurs de déflectométrie est déterminé respectivement vérifié.

**8.** Procédé selon la revendication 7, **caractérisé en ce que** la plaque de référence (5) est disposée, pour le contrôle du fonctionnement, de façon à ce que les points de l'image englobés par le dispositif de formation d'images (2) sont représentés par l'intermédiaire de la plaque de référence (5) sur le dispositif d'acquisition, dans lequel la plaque de référence (5) est positionnée à une distance prédéfinie du dispositif d'acquisition.

**9.** Procédé selon la revendication 7 ou 8, **caractérisé en ce que** le dispositif de formation d'images (2) fonctionne avec une luminosité homogène, dans lequel, de préférence, une image blanche est produite.

**10.** Procédé selon l'une des revendications 7 à 9, **caractérisé en ce que** l'image enregistrée avec l'élément d'acquisition (3) respectivement l'image enregistrée avec les éléments d'acquisition (3) comprend un groupe de repères comprenant des repères, dans lequel, à l'aide du groupe de repères enregistré avec l'image, l'au moins un paramètre du système de capteur de déflectométrie est déterminé.

**11.** Procédé selon l'une des revendications 7 à 10, **caractérisé en ce que** les paramètres du système de capteur de déflectométrie comprennent
au moins un paramètre de netteté,
au moins un paramètre de champ de vision,
au moins un paramètre de luminosité,
au moins un paramètre de position et/ou
au moins un paramètre de correction de robot.

**12.** Procédé selon la revendication 11, **caractérisé en ce que**
pour la détermination du paramètre de netteté d'un élément d'acquisition (3) du dispositif d'acquisition, des valeurs de netteté sont détectées respectivement analysées par des mires de Siemens (7) du motif prédéfini, plus particulièrement par des mires de Siemens (7) à l'intérieur d'un groupe de repères et/ou

pour la détermination du paramètre de champ de vision d'un élément d'acquisition (3) du dispositif d'acquisition, des positions sont détectées respectivement analysées par des mires de Siemens (7) du motif prédéfini, plus particulièrement par des mires de Siemens (7) à l'intérieur d'un groupe de repères et/ou

pour la détermination du paramètre de luminosité d'un élément d'acquisition (3) du dispositif d'acquisition, une détermination de niveaux de gris est effectuée dans une partie pouvant être prédéterminée, de préférence centrale, de l'image acquise par l'élément d'acquisition (3), dans lequel la partie de l'image est de préférence sélectionnée de façon à ce que, dans la partie de l'image, aucun repère du motif prédéfini ne soit présent et/ou

pour la détermination du paramètre de position d'un élément d'acquisition (3) du dispositif d'acquisition, des positions de repères codés (6) du motif prédéfini, plus particulièrement de repères codés (6) à l'intérieur d'un groupe de repères, sont détectées respectivement analysées et/ou

pour la détermination du paramètre de correction de robot, plus particulièrement pour la détermination d'une transformation 3D en tant que paramètre de correction de robot, des distances entre la position de consigne et la position actuelle des repères codés (6) sont déterminées, dans lequel le paramètre de correction de robot respectivement la transformation 3D est calculée au moyen d'un algorithme de minimisation.

13. Procédé selon l'une des revendications 7 à 12, **caractérisé en ce que**, pour la correction de la luminosité du système de capteurs de déflectométrie, un nouveau réglage de luminosité du dispositif de formation d'image (2) est calculé afin d'obtenir un niveau de gris de consigne du dispositif d'acquisition à partir d'un niveau de gris du dispositif d'acquisition enregistré avec un réglage de luminosité prédéfini du dispositif de formation d'images (2).

14. Procédé selon l'une des revendications 7 à 13, **caractérisé en ce que**, sur le dispositif de formation d'images (2), est généré un motif prédéfini et/ou une séquence de motifs prédéfinie.

18

EP 3 417 237 B1

Fig. 1

Fig. 2

Fig. 3

EP 3 417 237 B1

Fig. 4

EP 3 417 237 B1

Fig. 5

d = 0.18 * D

D

d

12

Fig. 6

Fig. 7

Fig. 8

EP 3 417 237 B1

Fig. 9

Fig. 10

Fig. 11

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011085322 A1
- US 20160025591 A1
- WO 2015169730 A1
- US 20100141776 A1
- JP H0735644 A
- EP 1003013 A1
- DE 102012208514 A1
- DE 19536297 A1
- US 20110007326 A1
- US 20090231574 A1

**In der Beschreibung aufgeführte Nicht-Patentliteratur**

- **MARKUS C. KNAUER et al.** Phase Measuring Deflectometry: a new approach to measure specular free-form surfaces. *Proceedings of SPIE,* 10. September 2004, vol. 5457, 366-376
- **BREITBARTH M. ; KÜHMSTEDT P. ; NOTNI G.** Calibration of a combined system with phase measuring deflectometry and fringe projection. *Proc. SPIE 7389, Optical Measurement Systems for Industrial Inspection VI,* 17. Juni 2009, 738909